# EUROPÄISCHE PATENTSCHRIFT

(11) **EP 0 983 474 B1**
(45) Veröffentlichungstag und Bekanntmachung des Hinweises auf die Patenterteilung: **08.08.2001**
(21) Anmeldenummer: 98921427.5
(22) Anmeldetag: 03.04.1998
(51) Int. Cl.: F28D 20/02, A47G 23/04, A41D 13/00

(54) **LATENTWÄRMEKÖRPER**
LATENT HEAT BODY
CORPS A CHALEUR LATENTE

(30) Priorität: 21.05.1997 DE 19721270; 09.02.1998 DE 19805028; 27.03.1998 DE 19813562
(43) Veröffentlichungstag der Anmeldung: 08.03.2000
(73) Patentinhaber: Schümann Sasol GmbH, 20457 Hamburg (DE)
(72) Erfinder: FIEBACK, Klaus, D-10369 Berlin (DE); MATTHÄI, Michael, D-24558 Henstedt-Ulzburg (DE); HABERSCHUSS, Toni, D-15526 Bad Saarow (DE); REINSHAGEN, Wolfgang, D-58769 Nachrodt-Wiblingwerde (DE)
(74) Vertreter: Müller, Enno, Dipl.-Ing.
(86) Internationale Anmeldenummer: EP9801956
(87) Internationale Veröffentlichungsnummer: WO9853264

(56) Entgegenhaltungen:
- EP-A- 0 165 596
- DE-U- 8 408 966
- FR-A- 2 536 155
- US-A- 4 931 333
- US-A- 5 305 821
- US-A- 5 314 005
- US-A- 5 390 791
- PATENT ABSTRACTS OF JAPAN vol. 097, no. 005, 30. Mai 1997 & JP 09 021592 A (FUJI ELECTRIC CO LTD), 21. Januar 1997

## Beschreibung

Die Erfindung betrifft einen Latentwärmekörper mit in einem Aufnahmeräume aufweisenden Trägermaterial aufgenommenem Latentwärmespeichermaterial wie z.B. Paraffin.

Aus dem deutschen Gebrauchsmuster 84 08 966 ist ein poriges Schaumstoffmaterial als Trägermaterial bekannt. Bei diesem Schaumstoffmaterial ist jedoch keine auch im erwärmten Zustand des Latentwärmespeichermaterials gewünschte Strukturfestigkeit zu erreichen. Überdies ist das porige Schaumstoffmaterial nicht ohne weiteres mit dem Latentwärmespeichermaterial zu tränken. Es müssen besondere Maßnahmen wie Quetschen ergriffen werden.

Hiervon ausgehend beschäftigt sich die Erfindung mit der technischen Problematik, einen Latentwärmekörper anzugeben, der bei einfacher Herstellbarkeit hoch wirksam ist, d. h. ein hohes Wärmespeichervermögen aufweist und zugleich auch im erwärmten Zustand eine ausreichende Strukturfestigkeit aufweist. Es ist auch angestrebt, daß das Trägermaterial sich möglichst selbsttätig mit dem Latentwärmespeichermaterial füllt bzw. dieses aufsaugt. Auch ist von Bedeutung, schon aufgrund der Eigenschaften des Trägermaterials ein hohes Rückhaltevermögen bezüglich des Latentwärmespeichermaterials zu erreichen.

Diese technische Problematik ist beim Gegenstand des Anspruches 1 gelöst, wobei darauf abgestellt ist, daß das Trägermaterial aus einzelnen für sich strukturfesten oder im Verbund mit dem Latentwärmespeichermaterial zur Strukturfestigkeit führenden Trägermaterialelementen beispielsweise durch Verkleben zusammengesetzt ist.

Für die Erfindung ist dabei von Bedeutung, daß zwischen den Trägermaterialelementen auch in Abwesenheit von Latentwärmespeichermaterial ein Zusammenhalt besteht, so daß es sich bei dem Trägermaterial um ein oder mehrere Gebilde aus jeweils einer Vielzahl von zusammenhängenden Trägermaterialelementen handelt. Die Trägermaterialelemente sind erfindungsgemäß in der Weise zusammengesetzt, daß zwischen ihnen kapillare Aufnahmeräume für das Latentwärmespeichermaterial ausgebildet sind, die eine spaltartige Form aufweisen können. Die vorbeschriebenen kapillaren Aufnahmeräume ermöglichen aufgrund ihrer kapillaren Zugwirkung auf ein Fluid ein weitgehend selbsttätiges Auffüllen bzw. Aufsaugen des Fluids durch das Trägermaterial sowie ein hohes Rückhaltevermögen desselben. Diese Wirkung wird für den erfindungsgemäßen Latentwärmekörper dadurch angewendet, daß das vorgeschlagene Latentwärmespeichermaterial auf Paraffinbasis, dem einzelne oder mehrere der in dieser Anmeldung angegebenen Zusätze beigegeben sein können, durch Erwärmung soweit verflüssigt wird, bis das selbstständige Aufsaugen zu beobachten ist. Das Latentwärmespeichermaterial wird dabei bis auf eine Temperatur erwärmt, die oberhalb der höchsten Schmelztemperatur der einzelnen darin enthaltenen Paraffine und Zusätze liegt. Das Latentwärmespeichermaterial wird dadurch so stark verflüssigt, daß es bis zur vollständigen Sättigung des Trägermaterials von diesem selbstständig aufgenommen werden kann. Aus dieser Wirkungsweise ergibt sich der Vorteil, daß auf aufwendige und daher kostenintensive technologische Verfahrensschritte unter hoher, insbesondere mechanischer Energiezufuhr verzichtet werden kann.

Die zu einem festen Verbund der Trägermaterialelemente untereinander führende Zusammensetzung ist zugleich geeignet, eine Größe der zwischen den Trägermaterialelementen verbleibenden Aufnahmeräume einzustellen und die gewünschte Strukturfestigkeit zu beeinflussen.

Durch die Einstellbarkeit der Größe der Aufnahmeräume besteht weiterhin die Möglichkeit, in Abhängigkeit von der Grenz- bzw. Oberflächenspannung des Latentwärmespeichermaterialseine hinsichtlich einer größtmöglichen Aufnahmekapazität und einer zugleich ausreichend hohen Kapillarwirkung optimierte Größe der Aufnahmeräume einzustellen.

Als Trägermaterial kommen organische Materialien wie Kunststoff oder Zellulose in Frage. Bevorzugt ist auch, daß ein Trägermaterialelement eine eigene Kapillarität aufweist. Beispielsweise eine Zellulosefaser, etwa eine Holzfaser, die für sich einen wesentlich feineren Kapillarraum ausbildet als die zwischen zwei Fasern gebildete Kapillarität. Von Bedeutung ist darüber hinaus, daß das Latentwärmespeichermaterial selbst homogen verteilte Hohlstrukturen ausbildet. Diese sind für das Leistungs- bzw. Ansprechverhalten des Latentwärmekörpers von besonderer Bedeutung. Solche Hohlstrukturen erbringen zunächst einmal Ausweichräume im Zuge der Volumenänderung bei Erwärmung oder Abkühlung. Diese Volumenänderunq kann durchaus im Größenbereich von 10% des Volumens liegen. Als Trägermaterialelemente können weiterhin Fasern mit einer sehr unterschiedlichen Länge und einem sehr unterschiedlichen Durchmesser verwendet werden. Geeignet sind insbesondere auch Keramikfasern, Mineralwolle, Kunststoffasern sowie weitere zweckmäßige Fasern, wie beispielsweise Baum- oder Schafwolle. Verwendete Keramikfasern bestehen vorzugsweise im wesentlichen aus Al₂O₃, SiO₂, ZrO₂ und organischen Beimischungen, wobei die Anteile der Komponenten stark variieren können. Je nach gewählten Anteilen schwankt auch die Dichte der Keramikfasern und liegt dabei vorzugsweise in einem Bereich zwischen 150 und 400kg/m³. Hinsichtlich der Mineralwolle ist vorzugsweise an einer Verwendung von Steinwolle mit und ohne Zusatz von duroplastischen Kunstharzen gedacht, die weiterhin Glasfaseranteile beinhalten kann. Die Dichte schwankt in Abhängigkeit von der im Einzelfall gewählten Zusammensetzung und liegt dabei vorzugsweise in einem Bereich zwischen 200 und 300kg/m³. Als Trägermaterialelemente geeignete Kunststoffasern weisen vorzugsweise Basismaterialien wie Polyester, Polyamid, Polyurethan, Polyacrylnitril oder Polyolefine auf.Hierzu kann das Latentwärmespeichermaterial ein Paraffin sein, wie es in der DE-OS 43 07 065 beschrieben ist.

Ein solches Paraffin weist im Erstarrungszustand Kristallstrukturen auf, die durch ein Strukturadditiv vorzugsweise im Sinne von Hohlstrukturen, wie etwa Hohlkegeln, modifiziert sind. Hierdurch ist es ermöglicht, das Ansprechverhalten des Latentwärmespeichermaterials bei Wärmezufuhr entscheidend zu verbessern. Das Latentwärmespeichermaterial wie Paraffin nimmt hierdurch eine gleichsam poröse Struktur an. Bei Wärmezufuhr können leichter schmelzende Bestandteile des Latentwärmespeichermaterials durch die im Material selbst gegebenen Hohlstrukturen hindurchfließen.Es kann sich, gegebenenfalls auch hinsichtlich vorhandener Lufteinschlüsse eine Art Mikro-Konvektion einstellen. Es ergibt sich auch eine hohe Durchmischungswirksamkeit.
Im weiteren ist auch eine Vorteilhaftigkeit hinsichtlich des bereits angesprochenen Ausdehnungsverhaltens bei Phasenänderung gegeben. Das Strukturadditiv ist in dem Latentwärmespeichermaterial vorzugsweise homogen gelöst. Im einzelnen haben sich Strukturadditive wie solche auf Basis von Polyalkylmetacrylaten (PA-MA) und Polyalkylacrylaten (PAA) als Einzelkomponenten oder in Kombination bewährt. Ihre kristallmodifizierende Wirkung wird dadurch hervorgerufen, daß die Polymermoleküle in die wachsenden Paraffinkristalle mit eingebaut werden und das Weiterwachsen dieser Kristallform verhindert wird. Aufgrund des Vorliegens der Polymermoleküle auch in assoziierter Form in der homogenen Lösung in Paraffin können auf die speziellen Assoziate Paraffine aufwachsen. Es werden Hohlkegel gebildet, die nicht mehr zur Bildung von Netzwerken befähigt sind. Aufgrund der synergistischen Wirkungsweise dieses Strukturadditives auf das Kristallisationsverhalten der Paraffine wird eine Hohlraumbildung und damit eine Verbesserung der Durchströmbarkeit des Wärmespeichermediums Paraffin (beispielsweise für in dem Latentwärmespeicherkörper eingeschlossene Luft oder Wasserdampf oder für verflüssigte Phasen des Latentwärmespeichermaterials, d. h. des Paraffins selbst) gegenüber nicht derartig compoundierten Paraffinen erreicht. Allgemein eignen sich als Strukturadditive auch Ethylen, Venylacetat-Copolymere (E, VA ), Ethylen-Propylen-Copolymere (OCP), Dien-Styrol-Copolymere sowohl als Einzelkomponenten als auch im Gemisch sowie alkylierte Naphthaline (Paraflow). Der Anteil der Strukturadditive fängt bei einem Bruchteil von Gewichtsprozenten, realistischerweise etwa bei 0.01 Gewichtsprozent an und zeigt insbesondere bis zu einem Anteil von etwa einem Gewichtsprozent spürbare Veränderungen im Sinne einer Verbesserung.

Dem Latentwärmespeichermaterial kann ein Zusatz zugesetzt sein, welcher zur Dickflüssigkeit führt. Es kann hier ein übliches Thixotropiemittel verwendet werden. Selbst im erwärmten Zustand, in welchem üblicherweise eine Verflüssigung des Latentwärmespeichermaterials gegeben ist, ist dann noch eine Schwerflüssigkeit, im Sinne einer gallertartigen Konsistenz, gegeben. Selbst bei einem unbeabsichtigten Durchtrennen eines solchen Latentwärmespeicherkörpers kommt es noch nicht oder nicht in wesentlichem Ausmaß zu einem Auslaufen von Latentwärmespeichermaterial.

Bevorzugt ist ein so gebildeter Latentwärmekörper auch vollständig mit einer Abdeckung, bevorzugt einer Kunststoffolie umschlossen. Die vollständige Umhüllung verhindert ein Auslaufen etwa erweichten oder verflüssigten Latentwärmespeichermaterials. Die Umhüllung kann beispielsweise auch mit Harnstoff vorgenommen werden. Die Platte kann in einen aufgeschmolzenen Umhüllungsstoff, also beispielsweise Harnstoff oder auch einen Kunststoff, wie etwa Nylon (Polyamid), eingetaucht werden. Bei Harnstoff ergibt sich der Vorteil einer stark brandhemmenden Wirkung. Die Verhinderung des Auslaufens ist insbesondere von Bedeutung bei Überschreiten der Nennbetriebsparameter. Dies gilt insbesondere bei Überschreiten der Nennbetriebsparameter.

Bevorzugt besteht die Trägerstruktur aus einem aus Einzelfasern zusammengesetzten Faserkörper. Hierbei können handelsübliche Faserplatten zum Einsatz kommen, wobei jedoch relativ weiche Faserplatten bevorzugt sind. Hartfaserplatten können nur im geringen Maße das Latentwärmespeichermaterial aufnehmen. Die Fasern sind bevorzugt selbst saugfähig. Beim Tränken einer solchen Faserplatte mit einem Latentwärmespeichermaterial auf Paraffinbasis saugen sich die Fasern mit Paraffin voll, werden "gewachst". Zudem werden auch noch die Kapillarräume zwischen den Fasern mit dem Latentwärmespeichermaterial gefüllt. Eine weitere Ausgestaltung sieht als Trägermaterial ein Vlies, beispielsweise ein übliches Saugvlies, vor, wie es etwa zum Aufsaugen von Öl, Säuren oder sonstigen Flüssigkeiten handelsüblich ist. Insbesondere kann es ein vollständig aus Polypropylenfasern bestehendes Vlies sein. Hierbei können die Fasern auch im Sinne der eingangs genannten allgemeinen Lehre miteinander verhaftet, beispielsweise verschweißt sein. Die Trägerstruktur des Vlieses hat aber auch unabhängig hiervon Bedeutung. Von besonderem Vorteil ist, daß sich die erwähnte Fasermatte und auch das Vlies beim Tränken mit dem Latentwärmespeichermaterial auf Paraffinbasis verfestigen. Die Struktur wird steifer. Beispielsweise wird eine derartige Faserplatte hierdurch druckfester und beispielsweise trittfest. Zudem verbessern sich auch die schalltechnischen Eigenschaften so geschaffener Latentwärmekörper. Es ist eine höhere Körperschalldämpfung zu beobachten. Der Trittschall, etwa bei Verwendung eines solchen Latentwärmekörpers im Fußbodenbereich, wird wirksam gedämpft. In weiterer vorteilhafter Ausgestaltung werden solche Trägerstrukturen verwendet, die eine zwei- bis zehnfache Tränkung mit Latentwärmespeichermaterial im Vergleich zu ihrem Eigengewicht ermöglichen. Bei den erwähnten Faserplatten wird beispielsweise eine drei- bis vierfache Tränkung mit Latentwärmespeichermaterial vorgenommen. Gleichwohl wird die Tränkung nicht soweit vorgenommen, daß Überquelleffekte entstehen. Es empfiehlt sich auch, einen äußeren Verschluß der Kapillaren, etwa durch Verschleifen, vorzunehmen. Dieser Verschluß wirkt noch zusätzlich zu der erwähnten Umhüllung. Hierbei ist es bevorzugt, daß der Verschluß der Kapillaren vor dem Tränken des Trägermaterials mit dem Latentwärmespeichermaterial vorgenommen wird.

Eine weitere besondere Lehre der Erfindung betrifft eine Ausgestaltung des Latentwärmespeichermaterials auf Paraffinbasis derart, daß auch im verfestigten Zustand noch eine Flexibilität gegeben ist. In Kombination mit den Trägermaterialelementen kann so ein flexibles Element, wie beispielsweise ein Sitzkissen oder eine Bandage erreicht werden. Hierzu ist vorgesehen, daß das Latentwärmespeichermaterial - auf Paraffinbasis - einen Anteil an Mineralöl und/oder an Polymeren, Kautschuken und/oder Elastomeren enthält. Die Kautschuke und/oder Elastomere führen vorrangig zu einer höheren Flexibilität. Sie sind mit weniger als 5 % Anteil enthalten.
Wenn die Polymere keine Elastomere sind, führen sie zu keiner Erhöhung der Flexibilität und verhindern nur, gegebenenfalls zusätzlich, ein Auslaufen. Vorzugsweise handelt es sich um hochausraffiniertes Mineralöl. Beispielsweise ein Mineralöl, welches man üblicherweise auch als Weißöl bezeichnet. Bei den Polymeren handelt es sich um vernetzte Polymere, die durch Copolymerisation hergestellt sind. Die vernetzten Polymere bilden mit dem Mineralöl durch Ausbildung eines dreidimensiona-. len Netzwerkes oder durch ihre physikalische Vernetzung (Knollenstruktur) eine gelartige Struktur. Diese Gele besitzen eine hohe Flexibilität bei gleichzeitiger Stabilität gegenüber einwirkenden mechanischen Kräften. Das Paraffin wird im flüssigen Zustand in diese Struktur eingeschlossen. Bei dem Phasenwechsel, der Kristallisation, werden die entstehenden Paraffinkristalle von der Gelstruktur umgeben, so daß sich eine flexible Gesamtmischung ergibt.

In einer möglichen Anwendung kann ein Latentwärmespeichermaterial, das Paraffin mit einer Schmelztemperatur von 50° Celsius und ein Copolymer mit einer Schmelztemperatur von 120° Celsius enthält, bis zu einer Temperatur von 125° Celsius aufgeheizt werden, so daß zunächst eine gleichmäßige Durchmischung beider Komponenten erreicht wird und die dünnflüssige Mischung vom Trägermaterial aufgrund der darin wirksamen Kapillarkräfte bis zur vollständigen Sättigung aufgenommen werden kann. Bei einer nachfolgenden Abkühlung werden die entstehenden Paraffinkristalle von dem Copolymer umgeben. Bei einer z. B. denkbaren oberen Betriebstemperatur des Latentwärmekörpers von 80° Celsius wird nur der Paraffinanteil, nicht dagegen das Copolymer, verflüssigt. Vorteilhaft wird dadurch erreicht, daß das Paraffin nicht aus dem Copolymer austreten kann und mit ihm im Trägermaterial verbleibt. Für die Erfindung ist wesentlich, daß das gewünschte Paraffinrückhaltevermögen in dem Latentwärmekörper bei Verwendung des oben beschriebenen Trägermaterials bereits bei einem Massenanteil von weniger als 5 % des Copolymers am Latentwärmespeichermaterial erzielt werden kann. Dabei kann insbesondere durch ein gezielt herbeigeführtes Zusammenwirken von Kapillarkräften in den Aufnahmeräumen des Trägermaterials und/oder von mittels Strukturadditiven beeinflußten Kristallstrukturen der Paraffine und/oder von den das Latentwärmespeichermaterial verdikkenden Thixotropiemitteln und/oder durch den beschriebenen Verschluß der Kapillaren sowie gegebenenfalls einer Umhüllung des Latentwärmekörpers erreicht werden, daß das gewünschte Paraffinrückhaltevermögen bereits bei deutlich niedrigeren Massenanteilen des Copolymers als 5 % erreicht wird. Ein Vorteil der Erfindung ist dabei darin gegeben, daß mit abnehmendem Massenanteil von Copolymeren der Massenanteil der Paraffine an der Gesamtmasse des Latentwärmespeichermaterials zunimmt und dadurch bei unveränderter Gesamtmasse eine höhere Wärmekapazität erreicht werden kann.

Zusammen mit dem oben näher beschriebenen Trägermaterial ergibt sich auch eine gewünschte Strukturfestigkeit, im Rahmen der Flexibilität. Hierbei können aber auch noch weitere Trägermaterialien als oben beschrieben zur Anwendung kommen. Hinsichtlich der Polymere werden beispielsweise Styrol-Butadien-Styrol (SBS), Styrol-Isopren-Styrol (SIS) oder Styrol-Ethylen/Butylen-Styrol (S-EB-S) eingesetzt. Dieses Styrol-Ethylen /Butylen Block-Copolymer eignet sich als Verdicker zur Erhöhung der Viskosität bzw. als Flexibilisator zur Erhöhung der Elastizität. Bei einem thermoplastischen Kunststoff existieren mehrere Typen von Copolymeren, die sich in ihrem strukturellen Aufbau unterscheiden. Zu unterscheiden sind dabei insbesondere die Block- und Triblock-Copolymere, deren Molgewicht variiert und die ein unterschiedliches Verhältnis von Styrol- zu Elastomeranteil aufweisen.

Weiterhin können auch Copolymere, wie beispielsweise HDPE (High Density Polyethylen), PP (Polypropylen) oder auch HDPP (High Density Polypropylen) verwendet werden.

Gegenstand der Anmeldung ist auch ein Latentwärmespeichermaterial auf Paraffinbasis, welches einen Zusatz in einer der vorstehend beschriebenen Ausgestaltungen aufweist. Sowohl der Latentwärmekörper wie auch das Latentwärmespeichermaterial können darüber hinaus und in Kombination ein Additiv aufweisen, das die oben erwähnten Hohlstrukturen ausbildet.

Das erfindungsgemäße Latentwärmespeichermaterial auf Paraffinbasis kann weiterhin auch ohne Trägermaterial, d. h. ohne stützende Matrix eingesetzt werden. Aus Schmelz-/Speicherkapazitäts- und Funktionsgründen ist der Copolymeranteil stets kleiner als 5 %. Das gebildete Gel wird in Behälterhüllen, wie bspw. Foliensäcken, aufgenommen.

Wesentlich ist, daß sich der erwähnte Zusatz aus Mineralölen und Polymeren einerseits homogen in dem Paraffin verteilt bzw. das Paraffin diesen Zusatz homogen durchsetzt und andererseits keine chemische Wechselwirkung zwischen dem Zusatz und dem Paraffin eintritt. Weiter ist von besonderer Bedeutung, daß die Auswahl dahingehend getroffen ist, daß praktisch keine Dichteunterschiede zwischen dem Zusatz und dem Paraffin gegeben sind, so daß auch keine physikalische Entmischung hierdurch auftreten kann.

Wie bereits eingangs erläutert, besteht in Verbindung mit einzelnen oder mehreren der vorangehend erläuterten Merkmalen die Möglichkeit, daß der erfindungsgemäße Latentwärmekörper eine Anzahl Latentwärmeteilkörper enthält. Bei einem Latentwärmeteilkörper handelt es sich um einen zusammenhängenden und abgegrenzten Teil, bzw. Bestandteil eines erfindungsgemäßen Latentwärmekörpers, der sämtliche physikalischen, chemischen und baulich strukturellen Merkmale des Latentwärmekörpers oder auch eine beliebige Auswahl hiervon auf sich vereinigen kann. Bevorzugt enthält ein Latentwärmeteilkörper ein Trägermaterialteil und das in kapillarartigen Aufnahmeräumen dieses Trägermaterialteils aufgenommene Latentwärmespeichermaterial. Das angesprochene Trägermaterialteil kann beliebige Kombinationen der bisher erläuterten Merkmale eines Trägermaterials aufweisen. In einer bevorzugten Ausführungsform enthält der Latentwärmekörper eine von seiner Form und Größe mitbestimmte größere Anzahl von Latentwärmeteilkörpern, die regelmäßig und/oder unregelmäßig aneinander angrenzend angeordnet werden können. Auf diese Weise lassen sich Latentwärmekörper nahezu beliebiger Formen auf preiswerte Weise herstellen, da die Latentwärmeteilkörper unabhängig von der Form der gewünschten Latentwärmekörper industriell in großer Stückzahl hergestellt werden können. In einer bevorzugten Ausgestaltung eines aus mehreren Latentwärmeteilkörpern gebildeten Latentwärmekörpers grenzen auch die in den Latentwärmeteilkörpern eingeschlossenen Trägermaterialteile aneinander. Diese sind deutlich von den Trägermaterialelementen zu unterscheiden, aus denen das Trägermaterial, wie oben erläutert, durch beispielsweise Verkleben zusammengesetzt ist. Innerhalb einzelner Trägermateralteile bilden danach die Trägermaterialelemente unter Einschluß kapillarartiger Aufnahmeräume zusammenhängende Strukturen. Auch zwischen benachbarten Latentwärmeteilkörpern kann jedoch ein Zusammenhalt bestehen, indem es beispielsweise zum gegenseitig verhakenden Eingriff von Trägermaterialelementen aneinander angrenzender Trägermaterialteile in die jeweilig benachbarten zusammenhängenden Strukturen kommt. Ein weiterer Zusammenhalt zwischen Latentwärmeteilkörpern ist dadurch möglich, daß eine Verbindung des Latentwärmespeichermaterials von aneinandergrenzenden Latentwärmeteilkörpern zustande kommt.

Bevorzugt weist das Volumenverhältnis von Latentwärmekörper zu Latentwärmeteilkörper zumindest den Wert 10 auf, wobei allerdings auch geringere oder wesentlich höhere Volumenverhältnisse sinnvoll sein können. Ein einzelner Latentwärmekörper kann außerdem Latentwärmeteilkörper verschiedener Größenabmessungen und/oder verschiedener Formen beinhalten. Desweiteren besteht auch die Möglichkeit, daß einzelne Latentwärmeteilkörper eine langgestreckte Form besitzen und zumindest im weitesten Sinne als Streifen ausgebildet sind. Alternativ kann ein Latentwärmeteilkörper auch eine flockenartige Form besitzen. Darüber hinaus können die Latentwärmeteilkörper auch in Form von Kugeln, Ellipsoiden, Quadern, Würfeln, Pyramiden, Zylindern und dergleichen ausgebildet werden. Die Auswahl der Anzahl, der Größen und der Formen der Latentwärmeteilkörper eines Latentwärmekörpers kann sich dabei an der Größe und Form des gewünschten Latentwärmekörpers sowie an den an ihn gerichteten Forderungen bezüglich seiner Steifigkeit oder Verformungsfähigkeit orientieren. In einer weiter bevorzugten Ausführung des Latentwärmeteilkörpers weist dieser eine Umhüllung auf, die beispielsweise aus einem Folienmaterial, insbesondere aus einer Aluminiumfolie oder aus einer Polypropylenfolie, besteht. Eine Folie bietet dabei den Vorteil einer leichten Verformbarkeit, so daß sich benachbarte Latentwärmeteilkörper aneinander anschmiegen können und Hohlräume zwischen den Latentwärmeteilkörpern weitgehend vermieden werden können. Alternativ oder in Verbindung damit besteht die Möglichkeit, daß auch eine Anzahl benachbarter Latentwärmeteilkörper mit einer gemeinsamen äußeren Umhüllung versehen sind, bei der es sich ebenfalls um eine der vorhergenannten Folien handeln kann. Weiterhin besteht die Möglichkeit, daß die gemeinsame äußere Umhüllung eine vergleichsweise feste, d.h. verglichen mit dem Latentwärmekörper bzw. den Latentwärmeteilkörpern schwerer verformbare Wandung aufweist. Sofern eine derartige feste Wandung als Hohlkörper ausgebildet ist, kann dessen Innenraum selbst bei komplizierten geometrischen Formen der gemeinsamen äußeren Umhüllung nahezu vollständig mit Latentwärmeteilkörpern jeweils bedarfsgerechter Größe, Form und Anzahl ausgefüllt sein. Die Latentwärmeteilkörper können dabei zur Verhinderung von größeren Hohlräumen in der festen gemeinsamen Umhüllung mit einem Druck beaufschlagt sein, so daß zumindest bereichsweise eine Verdichtung erzielt wird. Bei derart verdichteten Latentwärmeteilkörpern eines Latentwärmekörpers kann der Volumenanteil von Hohlräumen zwischen Latentwärmeteilkörpern z.B. weniger als 1 % Anteil am Gesamtvolumen des Latentwärmekörpers betragen. Die Umhüllung der einzelnen Latentwärmeteilkörper und/oder die gemeinsame Umhüllung der Latentwärmeteilkörper eines Latentwärmekörpers sind dabei bevorzugt so ausgestaltet, daß sie für Latentwärmespeichermaterial undurchlässig sind.

In einer alternativen vorteilhaften Ausgestaltung eines Latentwärmekörpers enthält dieser einer Mehrzahl von Latentwärmeteilkörpern, die von einer gemeinsamen, für einen Wärmeträger durchlässigen Hülle umgeben sind und die darin vorzugsweise voneinander beabstandet sind. Durch die Beabstandung der Latentwärmeteilkörper werden zwischen ihnen Hohlräume ausgebildet, die als Strömungswege für das Wärmeträgermedium geeignet sind. Insbesondere ist vorgesehen, daß ein Wärmeträgermedium aus einer äußeren Umgebung durch die dafür durchlässige äußere Umhüllung des Latentwärmekörpers in dessen Inneres tritt, dort die zwischen den Latentwärmeteilkörpern gebildeten Hohlräume durchströmt und anschließend durch die dafür durchlässige gemeinsame Umhüllung des Latentwärmekörpers wieder aus diesem hinaustritt. Ein auf diese Weise in seinem Inneren durchströmter Latentwärmekörper zeichnet sich durch eine besonders schnelle Wärmeübertragung von oder zu einem Wärmeträgermedium aus. Die gemeinsame Umhüllung der Latentwärmeteilkörper kann bspw. netz- oder gitterartig ausgebildet sind, d.h. es ist sowohl an leicht verformbare als auch an starre Strukturen gedacht. Die Ein- und Austrittsöffnungen der gemeinsamen äußeren Umhüllung der im Latentwärmekörper enthaltenen Latentwärmeteilkörper sind zweckmäßig so bemessen, daß ein weitgehend ungehinderter Ein- und Austritt des Wärmeträgermediums in bzw. aus dem Latentwärmekörper ermöglicht wird und daß dabei außerdem kein Latentwärmeteilkörper durch sie hindurchtreten können. Das Volumenverhältnis zwischen den in der Umhüllung enthaltenen Latentwärmeteilkörpern und den dazwischen befindlichen Hohlräumen kann in einem weiten Wertebereich liegen und dabei zahlenmäßig den Wert Eins deutlich über- oder unterschreiten. Sofern als Wärmeträgermedium eine Flüssigkeit verwendet wird, können die Latentwärmeteilkörper in ihrer Massendichte in der Weise eingestellt werden, daß sie im Wärmeträgermedium in der Schwebe gehalten werden. Auf diese Weise werden die gebildeten Hohlräume aufrechterhalten, wobei jedoch eine weitere Beschleunigung des Wärmeaustausches mit den Latentwärmeteilkörpern durch deren strömungsbedingte Zirkulation erreicht werden kann. Als flüssiges Wärmeträgermedium eignen sich bspw. Wasser oder Öle und darüber hinaus auch zweckmäßige andere Flüssigkeiten. Auch bei Verwendung eines gasförmigen Wärmeträgermediums, z.B. Luft, kann eine Resimentation der in der gemeinsamen Umhüllung enthaltenen Latentwärmeteilkorper durch eine gezielt herbeigeführte Strömung entgegengewirkt werden, die zu einer ständigen Schwebe bzw. Zirkulation der Latentwärmeteilkörper führt. Dies kann durch eine spezielle Ausgestaltung der Latentwärmeteilkörper begünstigt werden, bei der eine jeweils größere Oberfläche im Verhältnis zum Gewicht eines jeweiligen Latentwärmeteilkörpers verwirklicht ist. Gedacht ist bspw. an eine flockenartige Ausgestaltung der Latentwärmeteilkörper. Im übrigen können die Latentwärmeteilkörper einzelne oder mehrere der zuvor genannten Merkmale aufweisen.

Ein wie vorstehend ausgebildeter Latentwärmekörper kann, wie bereits angesprochen, als Fußbodenelement in eine Fußbodenheizung eingebaut werden.

Die Erfindung betrifft aber auch noch weitere Anwendungen solcher Latentwärmekörper.

Eine erste Anwendung besteht aus einem Plattenwärmetauscher, der als Platten solche Latentwärmekörper aufweist. Die Plattenelemente können dann beidseitig mit Medium beaufschlagt werden. Beispielsweise können hiermit auch regenerative Wärmetauscher, wie sie etwa in Wärmekraftwerken bekannt sind, ausgerüstet werden. Im einzelnen kann ein solches Plattenelement auch spiralförmig ausgebildet sein. Zur Ausbildung und Aufrechterhaltung der spiralförmigen Gestaltung, was aber auch auf ebenflächige Plattenelemente zutrifft, sind zwischen den Lagen Abstandselemente angeordnet. Diese sind gitterartig gestaltet derart, daß Durchströmwege offen sind.

In weiterer Ausführungsform ist bevorzugt, daß ein solches Plattenelement als Fassadenelement im Hausbau ausgebildet ist. Hierbei ist es besonders vorteilhaft, wenn das Fassadenelement mit Abstand zu einer Hauswand angeordnet ist. Die sich dann zwischen der Hauswand und dem Fassadenelement, das hierbei als Latentwärmespeicherelement ausgebildet ist, einstellende Kaminwirkung kann hierdurch einen Kühleffekt erbringen, auch durch Wärmespeicherung in dem Latentwärmekörper. Im weiteren wird auch das thermische Zeitverhalten verbessert. Etwa nach Sonnenuntergang gibt der Latentwärmekörper noch über lange Zeit Wärme, auch Strahlungswärme, auf gleichbleibender Temperatur an die Hauswand ab. Zugleich stellt ein solcher Latentwärmekörper ein Element mit relativ hoher Wärmedämmung dar. Vorteilhaft ist auch die Wetterunempfindlichkeit eines solchen Fassadenelementes. Eben durch die Tränkung mit Paraffin ist eine wasserabweisende Ausrüstung gegeben.

In weiterer Einzelheit kann in einem solchen Latentwärmekörper, für alle vorstehend beschriebenen Anwendungen, zusätzlich zu der bereits beschriebenen Trägerstruktur, auch noch eine kapillarbrechende Gitterstruktur, etwa aus einem Kunststoff, angeordnet sein. Hierdurch wird das nötige Gleichgewicht von Kapillarkräften und Schwerkraft, bei senkrechter Aufstellung des Latentwärmekörpers, in jedem Zeitpunkt in der befüllten Faserstruktur ermöglicht. Um eine Wasserdampfdiffusion zu ermöglichen, befinden sich in den Latentwärmekörpern entsprechende Überströmöffnungen wie Schlitze, Löcher und dergleichen. Von besonderer Bedeutung ist hierbei, daß diese Gitterstruktur hinsichtlich des Wärmeleitwertes etwa dem Latentwärmespeichermaterial entspricht. Übliche Metallstrukturen sind daher abzulehnen, da der Wärmeleitwert zu hoch ist.

Die Erfindung betrifft weiterhin ein Verfahren zur Herstellung eines Latentwärmekörpers mit in einem Aufnahmeräume aufweisenden Trägermaterial aufgenommenen Latentwärmespeichermaterial auf Paraffinbasis. Erfindungsgemäß ist darauf abgestellt, daß das Latentwärmespeichermaterial verflüssigt wird und daß das verflüssigte Latentwärmespeichermaterial an selbstansaugende kapillarartige Aufnahmeräume des Trägermaterials herangeführt wird. Die Verflüssigung des Latentwärmespeichermaterials kann dabei vorzugsweise durch Erwärmung erreicht werden. Die Verflüssigung zielt auf eine gute Fließfähigkeit des Latentwärmespeichermaterials, d.h. im wesentlichen auf eine geringe Viskosität und homogene Beschaffenheit ohne größere Festkörpereinschlüsse ab. Durch eine gute Fließfähigkeit wird eine wesentliche Voraussetzung dafür geschaffen, daß das Latentwärmespeichermaterial unter dem selbstansaugenden Einfluß der kapillarartigen Aufnahmeräume des Trägermaterials in die Aufnahmeräume eindringt, wenn es an diese herangeführt wird. Dazu kann das Trägermaterial z.B. in verflüssigtem Latentwärmespeichermaterial getränkt werden. Das Heranführen des verflüssigten Latentwärmespeichermaterials an selbstansaugende kapillarartige Aufnahmeräume des Trägermaterials kann beispielsweise dadurch bewerkstelligt werden, daß das Trägermaterial in verflüssigtes Latentwärmespeichermaterial eingetaucht wird. Vor und/oder während des Eintauchens können Prozeßparameter, die die selbständige Aufnahme des Latentwärmespeichermaterials im Trägermatermaterial beeinflussen, in die Aufnahme begünstigender Weise beeinflußt werden. Beispielsweise kann dem Latentwärmespeichermaterial fortwährend Wärmenergie zugeführt werden, um die Verflüssigung zu begünstigen. Weiterhin kann das verflüssigte Latenwärmespeichermaterial mit Druck beaufschlagt werden, wodurch die selbständige Aufnahme des Latentwärmespeichermaterials in den kapillarartigen Aufnahmeräumen des Trägermaterials ebenfalls begünstigt wird.

Die selbstansaugende Wirkung der Aufnahmeräume des Trägermaterials für Flüssigkeiten beruht auf der schon eingangs erläuterten kapillarartigen Ausbildung der Aufnahmeräume. Die selbstansaugende Wirkung der kapillarartigen Aufnahmeräume für verflüssigtes Latentwärmespeichermaterial und ihr Bestreben, dieses darin festzuhalten, wird um so stärker, je kleiner die Durchmesser der Kapillaren bzw. die inneren Radien von Kapillaren gewählt werden, je höher die Oberflächenspannung des Latentwärmespeichermaterials gegenüber Luft gewählt bzw. eingestellt wird und je größer die Benetzbarkeit des gewählten Trägermaterials durch Latentwärmespeichermaterial ist. Bei dem erfindungsgemäßen Verfahren zur Herstellung eines Latentwärmekörpers kann von diesen Zusammenhängen zur Einstellung einer gewünschten, insbesondere einer möglichst großen selbstansaugenden Wirkung der Aufnahmeräume bezüglich des Latentwärmespeichermaterials so vorgegangen werden, daß ein Trägermaterial mit einer möglichst hohen Oberflächenspannung ausgewählt wird und daß die einzelnen Trägermaterialelemente innere Kapillaren von bevorzugt niedrigen Krümmungsradien aufweisen und/oder Außenformen mit engen Krümmungsradien, insbesondere auch scharfen Kanten bzw. Ecken aufweisen. Bevorzugt wird das Trägermaterial aus einzelnen Trägermaterialelementen, beispielsweise durch Verkleben, zusammengesetzt, wobei jedenfalls zwischen den Trägermaterialelementen kapillarartige Aufnahmeräume gebildet werden. Auch bei dem Zusammensetzen der Trägermaterialelemente besteht daher die Möglichkeit, Einfluß auf die selbstansaugende Wirkung auszuüben, indem zur Steigerung bevorzugt enge, insbesondere auch spaltartige Kapillaren ausgebildet werden. Weiterhin kann das erfindungsgemäße Verfahren zur Herstellung eines Latentwärmekörpers auf Trägermaterial und Latentwärmespeichermaterial mit sämtlichen der bisher beschriebenen Merkmalen oder mit Kombinationen ausgewählter Merkmale angewendet werden.

Bei einer zweckmäßigen Variante des erfindungsgemäßen Verfahrens wird das mit Latentwärmespeichermaterial getränkte Trägermaterial in eine Anzahl Latentwärmeteilkörper zertrennt, wobei das Zertrennen durch Sägen und/oder Schneiden und/oder Reißen oder auch nach weiteren bekannten Trennverfahren erfolgen kann. Es besteht z.B. die Möglichkeit, eine als Trägermaterial gewählte Faserplatte aus Zellulose-Fasern mit zuvor verflüssigtem Latentwärmespeichermaterial auf Paraffinbasis zu tränken und das getränkte Trägermaterial in langgestreckte, insbesondere in streifenartige Latentwärmeteilkörper zu zersägen. Als weitere Variante ließe sich z.B. ein als Trägermaterial gewähltes Faservlies nach dem Tränken mit Latentwärmespeichermaterial in eine gewünschte Anzahl vergleichsweise kleinerer Latentwärmeteilkörper zerreißen, wobei letztere eine flockenartige oder aber auch eine davon abweichende Form aufweisen können. In einer Weiterbildung des erfindungsgemäßen Herstellungsverfahrens kann der Latentwärmekörper und/oder die Latentwärmeteilkörper gepreßt werden, um damit eine Verdichtung oder auch einer bevorzugte Formgebung zu erreichen. Es besteht auch die Möglichkeit, daß der Latentwärmekörper und/oder die Latentwärmeteilkörper mit einer Umhüllung versehen werden, die aus einer Folie, insbesondere aus einer Aluminium- oder Polypropylenfolie, bestehen kann. Dabei ist bevorzugt, daß der Latentwärmekörper bzw. der Latentwärmeteilkörper vollständig von einer für Latentwärmespeichermaterial undurchlässigen Umhüllung umgeben wird und darin, beispielsweise durch Verschweißen, in der Weise versiegelt wird, daß kein Latentwärmespeichermaterial aus der Umhüllung austreten kann. In einer Weiterbildung des erfindungsgemäßen Verfahrens können die Latentwärmeteilkörper des Latentwärmekörpers auch mit einer sie gemeinsam umgebenden Umhüllung versehen werden, die ebenfalls die vorgenannten Eigenschaften besitzen kann. Es kann insbesondere eine leicht verformbare gemeinsame Umhüllung vorgesehen werden, die in Verbindung mit einer Vielzahl darin enthaltener kleinerer Latentwärmeteilkörper zu einer gewünschten Verformbarkeit des Latentwärmekörpers führt. Alternativ kann eine gemeinsame Umhüllung verwendet werden, die gegenüber getränktem Trägermaterial eine höhere Steifigkeit bzw. geringere Verformbarkeit aufweist. Eine derartige Umhüllung, bei der es sich auch um mannigfaltige Gehäuse von alltäglichen Gebrauchsgegenständen handeln kann, kann nach einer Variante des erfindungsgemäßen Verfahrens mit einer gewünschten Anzahl von Latentwärmeteilkörpern ausgefüllt werden, und in einem weiteren Arbeitsschritt kann dann eine Verdichtung der Latentwärmeteilkörper in der gemeinsamen Umhüllung erfolgen. Mit dem erfindungsgemäßen Verfahren kann somit auf einfache, zeitsparende und preiswerte Weise eine nahezu vollständige Ausfüllung beliebiger Hohlräume in Gebrauchsgegenständen mit getränktem Trägermaterial erfolgen.

In einer vorteilhaften Weiterbildung eines erfindungsgemäßen Latentwärmekörpers ist in Verbindung mit einem oder mehreren der bisher erläuterten Merkmale vorgesehen, daß zumindest ein mikrowellenaktiver Stoff in dem Latentwärmekörper enthalten ist. Bei einem mikrowellenaktiven Stoff handelt es sich im Sinne der Erfindung um einen solchen Stoff, der unter einem Strahlungseinfluß von sogenannten Mikrowellen eine innere Erwärmung erfährt, die auf einer Bewegungsanregung seiner Moleküle durch die energiereiche elektromagnetische Strahlung beruht. Die Mikrowellen schließen sich dem Wellenlängenbereich der Infrarotstrahlung zu größeren Wellenlängen hin an. Insofern ist etwa von einer Mindestwellenlänge von 1,4 x 10 ⁻³ m auszugehen, wobei in dem technisch interessierenden Wellenlängenbereich durch eine Abstimmung der gewählten Wellenlänge auf die Molekülstruktur des zu verwendenden mikrowellenaktiven Stoffes eine Optimierung der inneren Erwärmung erreicht werden kann. Ein Latentwärmekörper, der einen derartigen mikrowellenaktiven Stoff enthält, weist dadurch den Vorteil auf, daß gegenüber einer Wärmeübertragung durch kurzwelligere Strahlung erheblich kürzere Zeiträume für die Zufuhr einer bestimmten Energiemenge erforderlich sind und eine dementsprechend schnellere Erwärmung möglich ist. Insbesondere ist daran gedacht, daß der mikrowellenaktive Stoff gleichmäßig im Latentwärmekörper verteilt enthalten ist, so daß auch eine entsprechende gleichmäßige Erwärmung zu beobachten ist. Eine gleichmäßige Verteilung setzt dabei im Sinne der Erfindung nicht unbedingt auch-eine homogene Verteilung voraus, da eine für technische Anwendungen ausreichende gleichmäßige Erwärmung des Latentwärmekörpers aufgrund von Wärmeleitvorgängen auch dann erreicht werden kann, wenn der mikrowellenaktive Stoff in hinreichend nahe zueinanderliegenden Anhäufungen über den Latentwärmekörper hinweg verteilt vorliegt. Dazu besteht z.B. die Möglichkeit, daß Trägermaterialelemente den mikrowellenaktiven Stoff enthalten, daß der mikrowellenaktive Stoff in kapillarartigen Aufnahmeräumen zwischen den bspw. durch Verkleben zu einem Trägermaterial zusammengesetzten Trägermaterialelementen oder in kapillarartigen Aufnahmeräumen innerhalb der Trägerelemente enthalten ist oder daß der mikrowellenaktive Stoff in Hohlräumen enthalten ist, die zwischen mehreren Latentwärmeteilkörpern gebildet sind, wobei auch Kombinationen dieser vorgeschlagenen Verteilungen denkbar sind. Eine gleichmäßige Verteilung des mikrowellenaktiven Stoffes im Latentwärmekörper wird dadurch unterstützt, daß der mikrowellenaktive Stoff in einer pulverartigen und/oder granulatartigen und/oder faserartigen Form darin enthalten ist. Sofern eine Aufnahme des mikrowellenaktiven Stoffes in den zwischen Latentwärmeteilkörpern gebildeten Hohlräumen des Latentwärmekörpers erfolgen soll, können schließlich auch größere zusammenhängende Strukturen des mikrowellenaktiven Stoffes vorteilhaft sein, deren Abmessungen auch von vergleichbarer Größe wie die des Latentwärmekörpers sein können. Gedacht ist insbesondere an ein gitterartiges Geflecht bzw. Netz aus einem mikrowellenaktiven Stoff, das in den Latentwärmekörper integriert vorgesehen ist. Alternativ oder in Kombination mit vorbeschriebenen Verteilungsformen des mikrowellenaktiven Stoffes als Festkörper kann zweckmäßig sein, daß der mikrowellenaktive Stoff zumindest bei Gebrauchstemperatur des Latentwärmekörpers eine Flüssigkeit ist, wobei hierzu in diesem Zusammenhang alle fließfähigen Medien zu zählen sind. Hinsichtlich der Werkstoffauswahl für den mikrowellenanaktiven Stoff sind für die Erfindung grundsätzlich alle Stoffe in Betracht zu ziehen, die eine innere Erwärmung unter Einwirkung von Mikrowellen erfahren. Vorzugsweise handelt es sich um einen Stoff, der in einer der Werkstoffgruppen Gläser, Kunststoffe, Mineralstoffe, Metalle, insbesondere Aluminium, Kohle und Keramik enthalten ist. Es besteht auch die Möglichkeit, daß in einem Latenwärmekörper mehrere verschiedene mikrowellenaktive Stoffe kombiniert miteinander verwendet werden. Es wird damit erreicht, daß eine schnellere Wärmeübertragung auf den Latentwärmekörper bei mehreren Wellenlängen bzw. in einem bestimmbaren Wellenlängenbereich möglich ist. Als bevorzugte Ausführungsformen des mikrowellenaktiven Stoffes werden exemplarisch granulatartige Glaskörper, granulatartige Kunststoffe, Mineralfasern, Keramikfasern, Kohlestaub, Metall, insbesondere Aluminiumpulver und ein ebenfalls bevorzugt aus einem Metall gebildeter Draht, der zu einem gitterartigen Geflecht weiterverarbeitet sein kann, genannt.

Zur Herstellung eines durch Mikrowellen erwärmbaren Latentwärmekörpers muß dem Latentwärmekörper bzw. einem Bestandteil von diesem, in einem Verfahrensschritt ein mikrowellenaktiver Stoff zugesetzt werden, wobei dieser Verfahrensschritt bevorzugt auf eine gleichmäßige Verteilung des mikrowellenaktiven Stoffes im Latentwärmekörper abzielt. Es kann so vorgegangen werden, daß der mikrowellenaktive Stoff den Trägermaterialelementen bei deren Herstellung zugesetzt wird. Insbesondere können die Trägermaterialelemente auch selbst unmittelbar aus mikrowellenaktivem Stoff hergestellt werden. Alternativ oder in Verbindung damit besteht auch die Möglichkeit, den mikrowellenaktiven Stoff beim Zusammensetzen des Trägermaterials aus Trägermaterialelementen, bspw. durch Verkleben, kontinuierlich oder diskontinuierlich in den dabei gebildeten kapillarartigen Aufnahmeräumen einzulagern. Dies kann z.B. dadurch geschehen, daß bei einem schichtweisen Aufbau des Trägermaterials nach Fertigstellung einer jeweiligen Schicht durch Verkleben von Trägermaterialelementen ein staub- bzw. pulverförmiger mikrowellenaktiver Stoff auf die Schichtoberfläche aufgepudert wird und nach dem Entfernen von überflüssigem Staub bzw. Puder eine weitere Schicht Trägermaterialelemente darauf vorgesehen wird, wobei beliebig viele Wiederholungen dieser Verfahrensschritte möglich sind. Bei einem Latentwärmekörper, der mehrere Latentwärmeteilkörper enthält, kann der mikrowellenaktive Stoff darüber hinaus auch in den zwischen Latentwärmeteilkörpern gebildeten Hohlräumen eingelagert werden. Der mikrowellenaktive Stoff kann dabei sowohl als Pulver, wie auch als Granulat oder Fasern und weiterhin auch als größere Struktur, insbesondere als Draht oder gitterartiges Geflecht verarbeitet werden. Vorzugsweise wird dabei in der Weise vorgegangen, daß zunächst eine Lage von Latentwärmeteilkörpern, z.B. in einer gemeinsamen Umhüllung angeordnet wird, daß darauf und in den Zwischenräumen der mikrowellenaktive Stoff abgelagert wird und daß darauf eine weitere Lage von Latentwärmeteilkörpern aufgebracht wird, wobei beliebig viele Wiederholungen dieser Arbeitsschritte möglich sind. Bei eine weiteren Variante des erfindungsgemäßen Herstellungsverfahrens wird der mikrowellenaktive Stoff dem Latentwärmespeichermaterial zugesetzt, bevor das Latentwärmespeichermaterial an die kapillarartigen Aufnahmeräume des Trägermaterials herangeführt wird. Vorzugsweise ist dabei auf eine gleichmäßige Verteilung des mikrowellenaktiven Stoffes im Latentwärmespeichermaterial zu achten, so daß der mikrowellenaktive Stoff auch in gleichmäßiger Verteilung in die kapillarartigen Aufnahmeräume des Trägermaterials hineingesaugt wird und dort mit dem Latentwärmespeichermaterial auf Paraffinbasis in gleichmäßiger Verteilung vorliegt. Alternativ oder in Kombination zu der bisher beschriebenen Verarbeitung des mikrowellenaktiven Stoffes in festem Aggregatzustand besteht auch die Möglichkeit, daß der mikrowellenaktive Stoff dem Latentwärmekörper in flüssiger Form zugesetzt wird, wobei hier prinzipiell sämtliche vorbeschriebene Zugabetechniken in Betracht zu ziehen sind.

Sofern der mikrowellanaktive Stoff in seinem Rohzustand nicht unmittelbar bei der Herstellung eines Latentwärmekörpers verwendet werden kann, beinhaltet das erfindungsgemäße Verfahren zur Herstellung eines durch Mikrowellen zu erwärmenden Latentwärmekörpers zusätzliche Verfahrensschritte, in denen eine gewünschte Beschaffenheit des mikrowellanaktiven Stoffes zu erreichen ist. Hierzu zählt z.B. eine jeweils bedarfsweise Aufbereitung des mikrowellenaktiven Stoffes zu einem Pulver, einem Granulat oder Fasern vorzugsweise durch mechanische Trennverfahren wie bspw. Sägen, Schneiden, Mahlen und Reißen. Sofern eine Verwendung des mikrowellenaktiven Stoffes in einer drahtartigen Form oder als gitterartiges Geflecht vorgesehen ist, umfaßt das erfindungsgemäße Verfahren zur Herstellung eines durch Mikrowellen erwärmbaren Latentwärmekörpers auch Verfahrensschritte zur Aufbereitung des mikrowellenaktiven Stoffes zu bedarfsgerechten Stukturen. Insbesondere zählen dazu das Drahtziehen geeigneter Werkstoffe und die Weiterbearbeitung der erhaltenen Drähte zu einem gitterartigen Geflecht.

Nachstehend ist die Erfindung im weiteren anhand beigefügter Zeichnung, die jedoch lediglich Ausführungsbeispiele darstellt, erläutert. Hierbei zeigt:
- Fig. 1: einen Querschnitt durch einen Latentwärmekörper auf Basis einer Faserplatte;
- Fig. 2: einen Latentwärmespeicher mit darin angeordneten Latentwärmespeicherkörpern;
- Fig. 3: eine Fassade mit Latentwärmespeicherkörpern;
- Fig. 4: einen Vertikalschnitt durch einen mobilen Speicherheizkörper mit Latentwärmekörpern;
- Fig. 5: einen Horizontalschnitt durch einen Transportbehälter für medizinische Zwecke mit Latentwärmekörpern;
- Fig. 6: einen Vertikalschnitt durch einen Hundefutterbehälter mit Latentwärmekörper;
- Fig. 7: einen Vertikalschnitt durch einen Katzenfutterbehälter mit Latentwärmekörper;
- Fig. 8a: eine Draufsicht auf ein Speicherelement für Luft-/Wasserwärmetauscher mit eingeschweißten Latentwärmekörpern;
- Fig. 8b: eine Seitenansicht des Speicherelements gemäß Fig. 11a in zusammengeklappter Anordnung;
- Fig. 9a: . eine Draufsicht auf eine Wärme-/Kühldecke mit darin eingenähten eingeschweißten Latentwärmekörpern;
- Fig. 9b: eine Seitenansicht der Wärme-/Kühldecke gemäß Fig. 12a in einer zusammengerollten Anordnung;
- Fig. 10: einen Handschuh mit darin integrierten eingeschweißten Latentwärmekörpern;
- Fig. 11: eine Schuhsohle in einer Ausbildung in einer Folie als eingeschweißter Latentwärmekörper;
- Fig. 12: eine Weste mit darin integrierten, in Folie eingeschweißten Latentwärmekörpern,
- Fig. 13a: eine Draufsicht auf einen Latentwärmekörper als Speicherelement für Bauwerke in einer Ausführung als getränkte Netzstruktur;
- Fig. 13b: eine Seitenansicht des Speicherelementes nach Fig. 16a in einer Anordnung zwischen zwei Wandelementen;
- Fig. 14: einen Solarverdunster mit Latentwärmekörper für einen Komposter;
- Fig. 15: einen Vertikalschnitt durch einen Hundefutterbehälter mit einem Latentwärmekörper, der eine Vielzahl Latentwärmekörperteile beinhaltet.

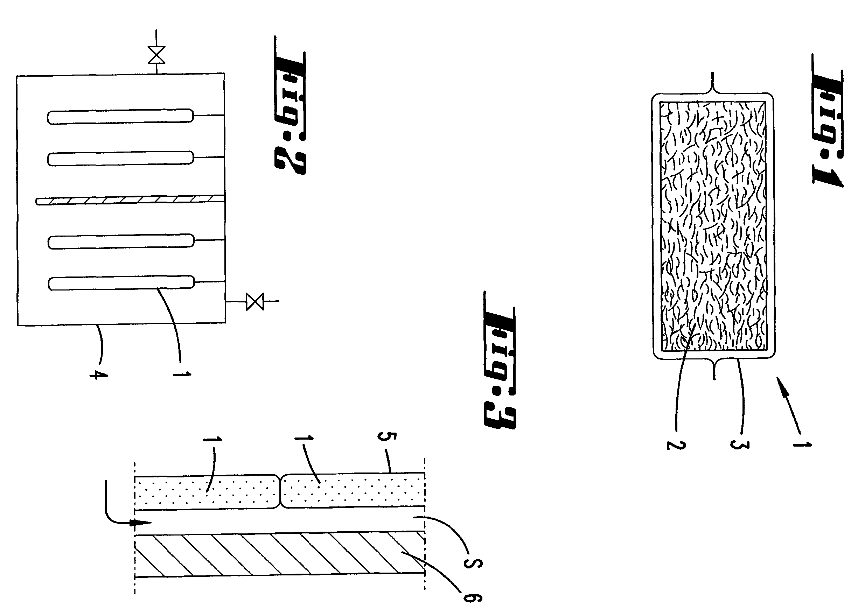

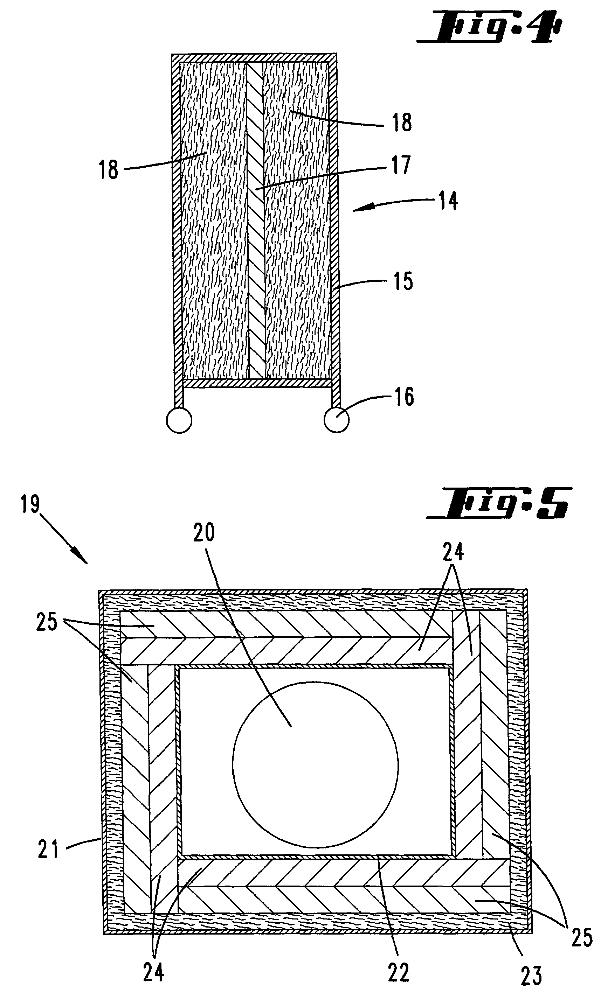

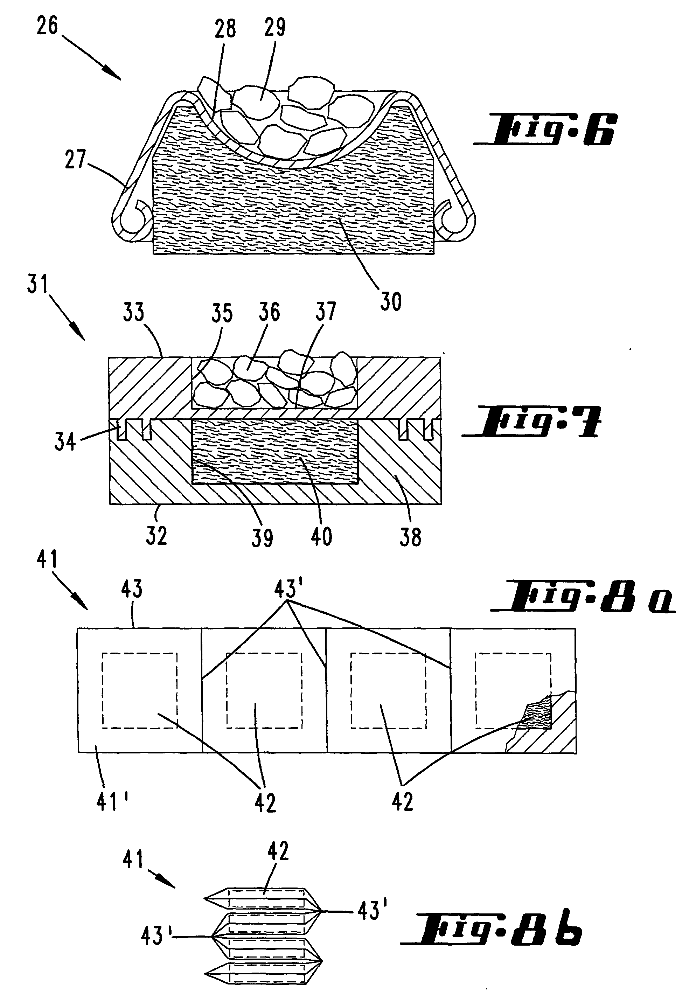

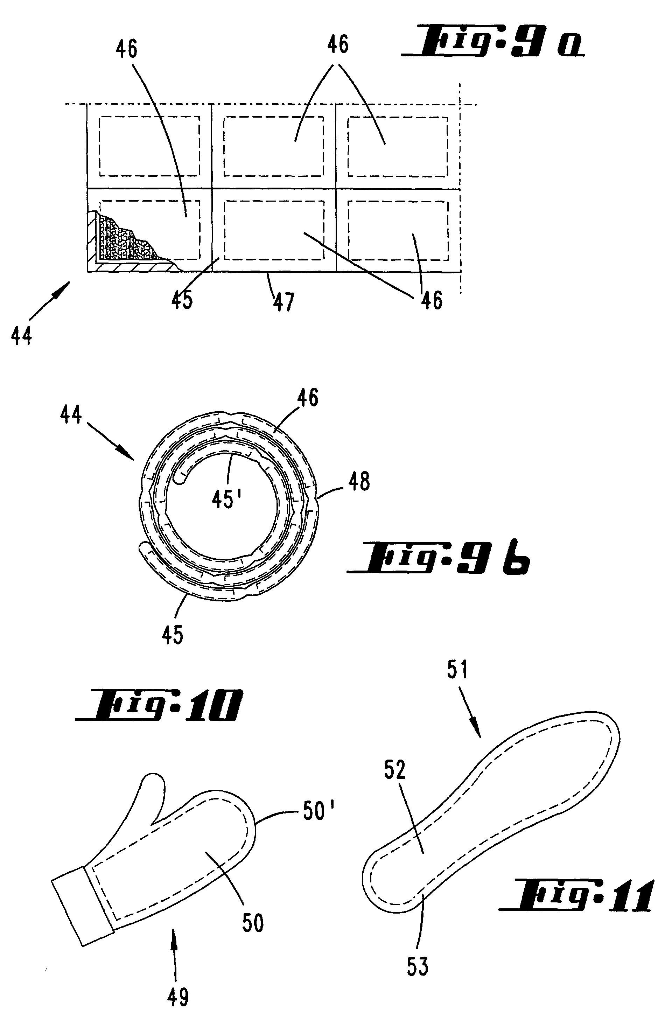

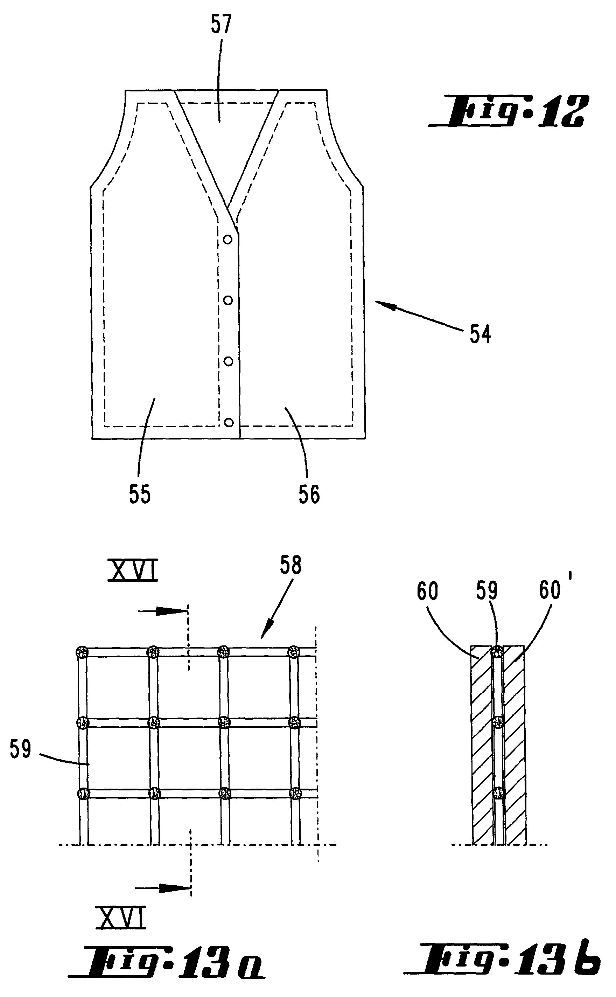

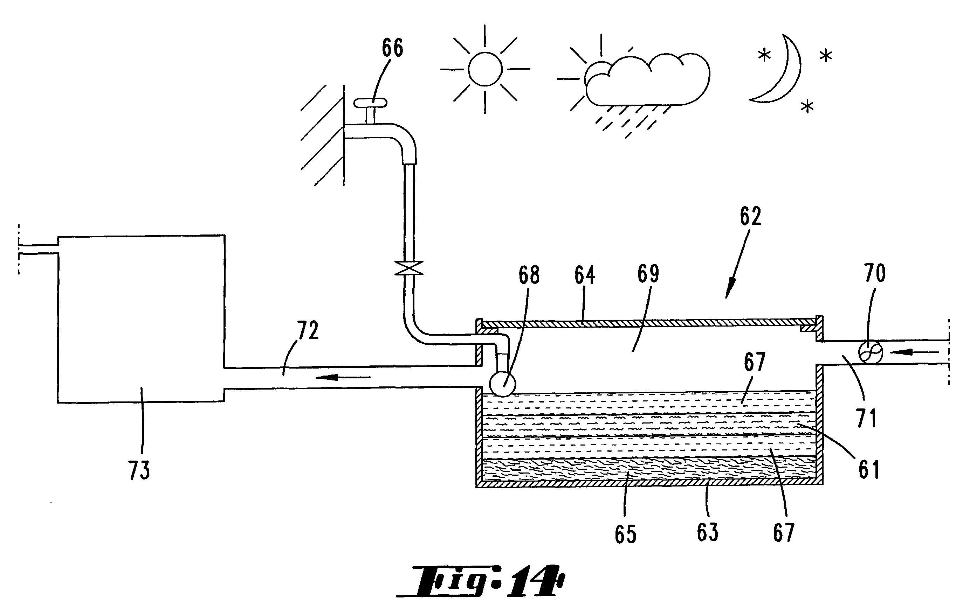

Dargestellt und beschrieben ist, zunächst mit Bezug zu Fig. 1, ein Latentwärmekörper 1, der aus einer Faserplatte 2 besteht, die mit einem Paraffin-Latentwärmespeichermaterial getränkt ist, und einer Umhüllung 3. Die Faserplatte 2 ist eine Weichfaserplatte, die mit einem Paraffin-Latentwärmespeichermaterial gefüllt ist. Die Füllung ist in Form einer Tränkung vorgenommen.

Es handelt sich im einzelnen um eine Faserplatte aus Pappelholzfasern, die im ungetränkten Zustand vergleichsweise weich ist. Es können aber auch sonstige Zellulosefasern zum Einsatz kommen. Im ungetränkten Zustand hat die Faserplatte eine Dichte von ca. 200kg/m³. Bevorzugt sind Faserplatten im Dichtebereich von 150 - 300kg/m³ im ungetränkten Zustand. Im getränkten Zustand hat die Faserplatte eine Dichte von ca. 700kg/m³. Bevorzugt ist hier ein Bereich von ca. 550 - 800kg/m³. Der Volumenanteil von Paraffin in der Strukturmatrix beträgt circa 50 %, der' Massenanteil des Paraffins bzw. des Latentwärmespeichermaterials in der Matrix ca. 68 %.

Die Faserplatte kann auch mit einem brandhemmenden Zusatz ausgerüstet sein. Überraschend ist, daß hinsichtlich festem oder verflüssigtem Zustand des Latentwärmespeichermaterials praktisch keine Maßänderungen der Faserplatte feststellbar sind. Dies insbesondere,. wenn das Latentwärmespeichermaterial mit einem Zusatz versehen ist, der, wie oben im einzelnen ausgeführt, zu der Gestaltung von inhärenten Hohlstrukturen führt.
Eine solche Faserplatte kann auch als Luft-Wärmeüberträger- oder Wasser-Wärmeüberträgerplatte wie auch als Wandspeicherplatte zum Einsatz kommen.

Alternativ hierzu ist auch eine getränkte Faserplatte auf Vliesbasis vorgeschlagen, die zeichnerisch nicht im einzelnen dargestellt ist. Es kommt ein hochporöses Vlies, etwa auch Polypropylenfasern, bevorzugt zur Anwendung. Ein solches Vlies kann im ungetränkten Zustand eine Dichte von circa 100kg/m³, mit einer bevorzugten Bandbreite von circa 70 - 150kg/m³ aufweisen. Getränkt mit Paraffin hat eine solche Platte auf Vliesbasis ein Gewicht von circa 700kg/m³, in einer Bandbreite von circa 600 - 800kg/m³. Der Anteil Latentwärmespeichermaterialien der Matrix beträgt hier circa 65 %, der Massenanteil entsprechend circa 85 %. Eine solche Faserplatte kann auch transparent bzw. opak ausgebildet sein. Wesentlich ist, daß eine solche Platte auch im verfestigten Zustand des Latentwärmespeichermaterials flexibel ist. Sie kann neben den vorerwähnten Anwendungsfällen beispielsweise auch als Matte etwa für Gewächshäuser zur Anwendung kommen.

Anstelle einer der beschriebenen Faserplatten kann auch, gegebenenfalls auch kombiniert mit einer Faserplatte, als Tränkungskörper ein Vlies oder eine Textilie in Frage kommen. Insbesondere sind hinsichtlich Textilien Baumwollgewebe oder Baumwollgewirke von Bedeutung.

Die Umhüllung 3 besteht aus einer Aluminiumfolie. Es kann sich aber auch um eine Polypropylenfolie handeln.

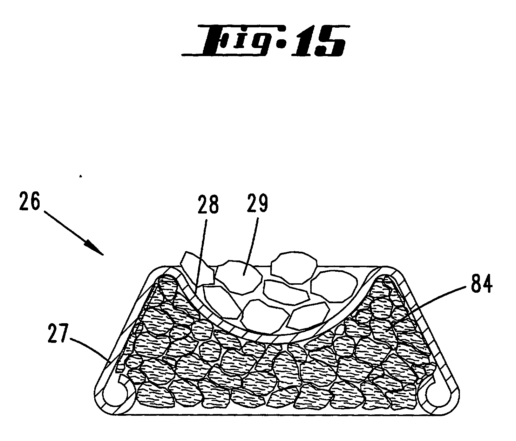

In Fig. 2 ist ein erster Anwendungsfall dargestellt. Es handelt sich um einen Latentwärmespeicher 4, in dem eine Mehrzahl von Latentwärmekörpern 1 senkrecht hängend angeordnet sind. Der Latentwärmespeicher 4 kann beispielsweise von Luft durchströmt werden. Er kann in gleicher Weise aber auch von Wasser durchströmt werden. Hierbei wird in an sich bekannter Weise dann in den Latentwärmekörpern 1 die Wärme gespeichert und in Folge dann bei Durchströmung mit einem relativ kälteren Wärmeträgermedium wieder abgegeben.

Bei dem Ausführungsbeispiel der Fig. 3 sind die Latentwärmekörper 1 als Fassadenelemente ausgebildet. Auf der Außenseite 5 können noch besondere Strukturen ausgebildet sein. Beispielsweise können hier auch Schieferplatten oder dergleichen noch vorgebaut sein. Wesentlich ist über die Anordnung als Fassadenelement hinaus, daß zwischen einer Mauerwand 6 und den Latentwärmekörpern 1 ein Spalt S verbleibt. Der Spalt S kann beispielsweise, bei unterer und oberer Öffnung, zu einem Kaminzugeffekt genutzt werden. Hiermit lassen sich die klimatischen Bedingungen und insbesondere die Anpassung an den Tag-Nacht-Zyklus wesentlich verbessern. Es kommt zu einem phasenverschobenen Kühl- bzw. Wärmeffekt. Da die Aufheizung des Latentwärmespeichermaterials zunächst nur bis zur Phasenwechseltemperatur eintritt und dann ein gewisser Halteeffekt auftritt, braucht es länger, bis die Wärme "durchbricht". Umgekehrt ist dann, wenn die Aufheizung durch die Sonne wegfällt, die Übererwärmung schnell abgebaut, dagegen verbleibt ein längerer Wärmeeffekt auf etwa der gleichen Stufe, wenn die Temperatur des Phasenwechsels erreicht ist.

Fig. 4 zeigt einen mobilen Speicherheizkörper 14, der ein äußeres Gehäuse 15 aufweist und mit Rollen 16 verfahrbar ist. Im Gehäuseinneren befindet sich ein Heizelement 17, das beispielsweise aus stromdurchflossenen Drähten gebildet sein kann, zu dessen beiden Seiten Latentwärmekörper 18 angeordnet sind. Bei eingeschaltetem Heizelement 17 wird die davon abgegebene Wärme bevorzugt von den flächenparallel angeordneten Speicherelementen 18 aufgenommen und auch noch nach Ausschalten des Heizelementes 17 über einen längeren Zeitraum hinweg gleichmäßig über das Gehäuse 15 an die Umgebung abgegeben.

In Fig. 5 ist in einem Horizontalschnitt ein Transportbehälter 19 für medizinische Zwecke, beispielsweise für die Aufbewahrung oder den Transport von Blutkonserven oder Organen 20, gezeigt. Der Behälter besteht aus einem stabilen Außengehäuse 21 und einem darin mit Wendeabstand aufgenommenen Innenbehälter 22, der gegenüber dem Außenbehälter kleinere Abmessungen besitzt. Die Innenseite des Außenbehälters ist dabei durchgehend mit einer Isolierschicht 23 ausgekleidet, bei der es sich um herkömmliche Isolierkörper, beispielsweise um Styropor, handeln kann. Der verbleibende Raum zwischen der Isolierschicht 23 und dem Innenbehälter 22 dient zur Aufnahme von Latentwärmekörpern 24, 25, bei denen es sich im gezeigten Beispiel um getränkte Holzfaserelemente handelt. Ebenso besteht hier aber auch die Möglichkeit, aus einem getränkten Vlies hergestellte oder weitere der in der Anmeldung beschriebenen Latentwärmekörpereinzusetzen. Im dargestellten Ausführungsbeispiel sind Latentwärmekörper 24, 25 paarweise flächenparallel zueinander angeordnet, so daß der Raum zwischen Innenbehälter 22 und Isolierschicht 23 vollständig von ihnen ausgefüllt wird. Dabei sind mehrere Paare von Latentwärmekörpern 24, 25 versetzt zueinander angeordnet. Alternativ zu der dargestellten Anordnung sind auch andere zweckmäßig erscheinenden Anordnungen realisierbar. Die Latentwärmekörper 24 und 25 können sich hinsichtlich der Phasenumwandlungstemperaturen ihrer jeweiligen Latentwärmespeichermaterialien unterscheiden, so daß in Abhängigkeit von der Umgebungstemperatur des Außenbehälters 21 und der gewünschten Temperatur im Innenbehälter 22 durch einen mehrstufigen Speicher mit ausgewählten Phasenumwandlungstemperaturen eine optimale Speicherwirkung eingestellt werden kann. Der Transportbehälter 19 weist ferner einen nicht dargestellten Boden und einen beispielsweise mit Scharnieren daran verschwenkbaren Deckel auf, wobei im Boden- und Deckelbereich zweckmäßig ebenfalls ein Verbundaufbau aus einer Isolationsschicht 23 und Latentwärmekörpern 24, 25 vorgesehen ist.

Fig. 6 beschreibt in einem Vertikalschnitt einen Hundefutterbehälter 26, der ein Außengehäuse 27 aufweist, an dessen Oberseite eine Ausformung 28 für das Hundefutter 29 vorgesehen ist. Der sowohl unterhalb wie auch seitlich der Ausformung gelegene Innenraum des Futterbehälters dient zur Aufnahme eines Latentwärmekörpers 30, der in der bevorzugten Anwendung als Kühlelement dient und über den gut wärmeleitfähig ausgestalteten Wandbereich der Ausformung 28 in Wärmeaustausch mit dem Hundefutter steht.

Der in Fig. 7 in einem Vertikalschnitt dargestellte Katzenfutterbehälter 31 besteht aus einem Untergehäuse 32, auf das ein Obergehäuse 33 aufgesetzt und dabei mittels einer Zentriereinrichtung 34 zentriert worden ist. Die Zentriereinrichtung 34 kann aus stift- oder wulstartigen Vorsprüngen im Oberteil 33 und hinsichtlich der Form und Lage angepaßten Aussparungen im Unterteil 34, aber auch auf andere zweckmäßige Weise, ausgebildet sein. Das Oberteil 33 weist eine Ausformung 35 zur Aufnahme des Katzenfutters 36 auf, wobei der Bodenbereich 37 der Ausformung 35 bevorzugt dünnwandig und aus einem gut wärmeleitenden Material hergestellt ist. Das Untergehäuse 32 weist in seinem Inneren eine Wärmedämmung 38 auf, die ihrerseits an der Oberseite mit einer Ausnehmung 39 zur Aufnahme eines Latentwärmekörpers 40 ausgestattet ist. Als Latentwärmekörper 40 eignen sich in diesem Zusammenhang sämtliche der in der Anmeldung beschriebenen Ausführungsformen. Gemäß der Darstellung ist vorgesehen, daß bei auf das Untergehäuse 32 aufgesetztem Obergehäuse 33 die Unterseite des Obergehäuses im Bereich der Ausnehmung 35 flächenparallel in Kontakt mit den Latentwärmekörpern 40 steht, so daß ein guter Wärmeübergang zwischen dem Tierfutter und dem Latentwärmekörper gegeben ist. Die mit Bezug auf die Fig. 6, 7 beschriebenen Futterbehälter können darüber hinaus auch zur Aufnahme weiterer, nicht im einzelnen erwähnter Futtersorten verwendet werden.

Fig. 8a zeigt eine Draufsicht auf ein Speicherelement für Luft/Wasserwärmetauscher 41, das im Beispiel aus vier in einer Einschweißfolie 41' eingeschweißten Latentwärmekörpern 42 gebildet ist. Alternativ zu der gezeigten reihenartigen Anordnung von vier Latentwärmekörpern 41 sind auch beliebige andere Anzahlen und Anordnungen von Latentwärmekörpern in einem derartigen Speicherelement realisierbar. Für den gezeigten Anwendungsfall sind sämtliche in der Anmeldung beschriebene Ausführungsformen von Latentwärmekörpern einsetzbar. In dem gezeigten Ausführungsbeispiel ist vorgesehen, daß die Latentwärmekörper 42 zwischen zwei aufeinander gelegten Folienstücken 41' angeordnet sind und vollständig umlaufend mit Schweißnähten 43, 43' umgeben sind.
Es wird weiterhin vorgeschlagen, daß die Schweißnähte 43' zwischen benachbarten Latentwärmekörpern 41 als bevorzugte Biege- oder Knickbereiche ausgebildet sind, so daß das Speicherelement 41 für verschiedene Anwendungsfälle in unterschiedliche Gebrauchsformen gebracht werden kann, ohne dabei die Latentwärmekörper 42 zu beschädigen.

Fig. 8b zeigt eine Seitenansicht des Speicherelementes für Luft/Wasserwärmetauscher nach Fig. 8a in einer möglichen zusammengeklappten Anordnung.

Fig. 9a zeigt eine Draufsicht auf eine Wärme-/Kühldecke 44 in ausgebreitetem Zustand. Wie sich in Verbindung mit Fig. 9b, die einen zusammengerollten Zustand der Decke 44 in einer Seitenansicht zeigt, ergibt, besteht die Decke 44 aus zwei parallel zueinander angeordneten Gewebelagen 45, 45', zwischen denen eine Anzahl einzeln in nicht näher dargestellten Schutzhüllen eingeschweißter Latentwärmekörper 46 eingenäht ist.

Entsprechend dem Ausführungsbeispiel der Fig. 9a, 9b sind die Gewebelagen 45, 45' durch randseitige Nähte 47 und Zwischennähte 48 zwischen den Latentwärmekörpern 46 miteinander verbunden, so daß ein innerer Zusammenhalt ohne die Gefahr des Verrutschens von Latentwärmekörpern 46 entsteht. Die dargestellte Wärme-/Kühldekce 44 kann beispielsweise als Babydecke oder Unfalldecke Anwendung finden. Bevorzugt kommen daher flexible Latentwärmekörper 46 dort zum Einsatz, bei deren Trägermaterial es sich um ein Vlies handeln kann. Während in Fig. 9a in einer Draufsicht nur ein Ausschnitt einer ausgebreiteten Wärme-/Kühldecke 44 gezeigt ist, gibt Fig. 9b in einer Seitenansicht eine zusammengerollte Anordnung einer vollständigen Decke wieder. Abweichend von dem gezeigten Ausführungsbeispiel sind auch Ausbildungen mit abweichender Form, Anzahl und Anordnung von Latentwärmekörpern 46 denkbar.

Fig. 10 zeigt als weiteres Anwendungsbeispiel eine Draufsicht auf einen Handschuh 49, zwischen dessen inneren und äußeren, nicht näher dargestellten Gewebeschichten Latentwärmekörper 50, 50' eingenäht sind. In diesem Anwendungsbeispiel werden ebenfalls bevorzugt flexible Latentwärmekörper eingesetzt, deren Trägermaterial ein Vlies sein kann.

Fig. 11 zeigt eine Einlegesohle 51 für einen Schuh. Danach wird vorgeschlagen, einen bevorzugt flexible Eigenschaften aufweisenden Latentwärmekörper 52 in eine Folie 53 einzuschweißen, wobei auf der Ober- und/oder Unterseite der Sohle 52 nicht dargestellte weitere Sohlenschichten befestigt sein können. Dabei können an der Sohlenunterseite bevorzugt strukturierte Lagen aus Materialien wie etwa Schaumstoff oder Gummi verwendet werden, die ein Verrutschen der Einlegesohle 51 im Schuh verhindern. Auf der Oberseite der Sohle 51 können vorzugsweise textile, beispielsweise auch wattierte Gewebelagen eingesetzt werden, die den Tragekomfort zusätzlich erhöhen.

Fig. 12 verdeutlicht in einer Draufsicht eine Weste 54, zwischen deren nicht näher zeichnerisch unterschiedenen inneren und äußeren Stoff schichten Latentwärmekörper 55, 56 und 57 eingenäht sind. Um einen bestmöglichen Tragekomfort zu erzielen, finden dabei bevorzugt flexible Latentwärmekörper Verwendung, die einzeln in eine Umhüllung eingeschweißt sind. Als Umhüllung eignen sich beispielsweise Folien und hier insbesondere Aluminium- oder Polypropylenfolien.

Fig. 13a zeigt eine Ansicht eines als Speicherelement für Bauwerke ausgebildeten erfindungsgemäßen Latentwärmekörpers 58. Danach weist der Latentwärmekörper eine netzartige Struktur eines Trägermaterials 59 auf, das aus textilen Werkstoffen, Flachs oder weiteren zweckmäßigen Materialien mit kapillaren Aufnahmeräumen für das erfindungsgemäße Latentwärmespeichermaterial bestehen kann. Gemäß dem gezeigten Ausführungsbeispiel ist das Trägermaterial 59 mit nicht näher dargestelltem Latentwärmespeichermaterial getränkt, wobei die getränkte Netzstruktur für Wasserdampf durchlässig ist und daher eine Wasserdampfdiffusion in Wänden von Bauwerken ermöglicht.

In Fig. 13b ist eine bevorzugte Anwendung eines Speicherelementes nach Fig. 13a anhand einer Schnittdarstellung entlang der Schnittlinie XVI-XVI dargestellt. Das Speicherelement 58 ist danach ist senkrechter Anordnung flächenparallel zwischen zwei beabstandeten Wandelementen 60, 60' angeordnet. Alternativ zu der dargestellten Ausführungsform sind auch abweichende Ausbildungen von Netzstrukturen möglich.

Fig. 14 beschreibt anhand einer Schemaskizze eine bevorzugte Anwendung eines erfindungsgemäßen Latentwärmekörpers 61 als Speicherelement für einen Solarverdunster 62. Der Solarverdunster weist danach ein Außengehäuse 63 auf, das oberseitig mit einer energiereichen Strahlung, beispielsweise Sonnenstrahlung, hindurchlassenden Abdeckung 64, beispielsweise einer Glasplatte, verschlossen ist. Im Bodenbereich des Außenbehälters ist eine Isolierschicht 65 angeordnet, die aus herkömmlichen Isoliermaterialien, beispielsweise Styropor, hergestellt sein kann. Ebenso besteht auch die Möglichkeit, daß auch die Seitenwände des Außengehäuses mit entsprechenden Isolierschichten ausgestattet sind. Über einen Zulauf 66 wird vorzugsweise Wasser 67 in das Gehäuse eingeleitet, wobei ein gewünschter Füllstand unter Anwendung eines Sicherheitsventils 68, bei dem es sich - wie dargestellt - um einen Schwimmer handeln kann, nicht überschritten wird. In den zwischen der Abdeckung 64 und der Wasseroberfläche verbleibenden Raum 69 wird von einem Ventilator 70 über eine Zuleitung 71 Luft vorzugsweise eingeblasen, die sich oberhalb des Wasserspiegels mit Wasserdampf anreichert und aufgrund des entstehenden Überdruckes durch eine Leitung 72 in einen Verbraucher 73 entweicht, bei dem es sich im dargestellten Anwendungsfall um einen Komposter handelt. Die für die Verdunstung des Wassers erforderliche Energie wird dem Behälter mittels durch die Abdeckung 64 einfallender energiereicher Strahlung zugeführt. Der dargestellte Latentwärmekörper 61 befindet sich unterhalb der Wasseroberfläche und ist im gezeigten Ausführungsbeispiel auf nicht näher dargestellte Weise mit herkömmlichen Befestigungselementen an Seitenwänden des Gehäuses 63 befestigt. Alternativ besteht auch die Möglichkeit, daß der Latentwärmekörper 61 unbefestigt im Wasser schwimmt. Dazu wird vorgeschlagen, daß an dem Latentwärmekörper bedarfsweise Auf-oderAbtriebselemente befestigt sind, durch die der Latentwärmekörper im umgebenden Wasser gerade in der Schwebe gehalten wird, so daß kein Emporsteigen zur Oberfläche oder Absetzen auf dem Behältergrund möglich ist und alle Oberflächen des Latentwärmekörpers am Wärmeaustausch teilnehmen. Als Abtriebsmittel können beliebige Gewichte verwendet werden, als Auftriebselemente sind z. B. luftgefüllte Kammern vorstellbar, Gegenüber herkömmlichen Solarverdunstern besteht der Vorteil der in Fig. 14 dargestellten Anordnung darin, daß der verwendete Latentwärmekörper 61 bei intensiver Sonneneinstrahlung und damit hoher Wärmezufuhr einen Großteil der gerade nicht zur Verdunstung benötigten Wärme zur Speicherung aufnimmt und diesen während Bewölkungs-undNachtphasen geringerer Einstrahlungsintensität an das umgebende Wasser abgibt, so daß eine Vergleichmäßigung der Verdunstungsleistung erreicht wird. Für die in Fig. 14 beschriebene Anwendung kann der Latentwärmekörper 61 wahlweise aus beliebigen der in der Anmeldung genannten Trägermaterialien und Latentwärmespeichermaterialien hergestellt sein. Aufgrund der vernachlässigbaren Mischbarkeit des Latentwärmespeichermaterials mit Wasser kann der Latentwärmekörper außerdem wahlweise mit oder ohne Umhüllung verwendet werden. Sofern auf eine äußere Umhüllung des Latentwärmekörpers verzichtet wird, können die Kapillaren des Trägermaterials außenflächig durch Verschleifen oder dergleichen verschlossen sein, so daß ein zusätzlicher Schutz gegen ein Austreten von Latentwärmespeichermaterial in die Umgebung erreicht wird.

Die Erfindung betrifft weiterhin Kissen, Unterlagen, Rollen, Bandagen, Bänder, Gürtel und Einlagen, Packungen, Kompressen zur Wärme- und/oder Kälteapplikation für medizinische, orthopädische und veterinärmedizinische Zwecke, die mit dem erfindungsgemäßen Latentwärmekörper ausgestattet sind. In diesem Zusammenhang ist vorzugsweise an die Verwendung von flexiblen Latentwärmekörpern gedacht, als dessen Trägermaterial daher insbesondere ein Vlies, eine auf Vliesbasis hergestellte Faserplatte oder auch eine aus einem anderen Werkstoff hergestellte flexible Faserplatte besonders gut geeignet ist. Weitere bevorzugte Anwendungen des erfindungsgemäßen Latentwärmekörpers beziehen sich auf Gürtel, Einlagen zur Wärme- und/oder Kälteapplikation für gesundheitliche Zwecke und insbesondere zur Verwendung beim Sport, in der Freizeit und/oder am Arbeitsplatz.

Über den in Fig. 5 gezeigten Transportbehälter für medizinische Zwecke hinausgehend ist weiterhin daran gedacht, erfindungsgemäße Latentwärmekörper mit oder ohne umgebende Behälter und Folien zum Zwecke der Isolierung und/oder der Wärmespeicherung in weiteren Thermo-Transport- und/oder -verpackungsmitteln einzusetzen. Auch Thermobehälter für Lebensmittel zur gewerblichen Verwendung und/oder für den Haushalt stellen einen möglichen Anwendungsbereich für erfindungsgemäße Latentwärmekörper dar.

Über die bisher in der Anmeldung beschriebenen Anwendungsmöglichkeiten für Bauzwecke ist im Baubereich noch an weitere Einsatzmöglichkeiten gedacht, wie beispielsweise der Ummantelung von Schwimmbecken - hier insbesondere von unbeheizten Freibädern - zur Vergleichmäßigung der von der Sonneneinstrahlung mitbestimmten Wassertemperatur über den Tagesablauf hinweg. Erfindungsgemäße Latentwärmekörper lassen sich im Baubereich außer zur Wärmespeicherung auch als Kältespeichermaterial verwenden. Hier ist z. B. an eine Anwendung in Kühlhäusern gedacht, in denen die Latentwärmekörper z. B. hinter Wandverkleidungen, aber auch im Boden- und/oder Deckenbereich angeordnet sein können und auch bei schubweisem Betrieb eines Kälteaggregates eine gleichmäßige Absenkung der Raumtemperatur ermöglichen. Die Schaltfrequenz des Kompressors wird dadurch auf vorteilhafte Weise erniedrigt.

Darüber hinaus können erfindungsgemäße Latentwärmekörper auch bei Land-, Luft- und Wasserfahrzeugen als Latentwärme- und/oder -Kältespeichermaterial verwendet werden. Dabei ist z. B. an einen Einsatz in Frachträumen von Lieferwagen, Flugzeugen und Schiffen gedacht. Dabei ist z. B. an einen Einsatz in Frachträumen von Lieferwagen, Flugzeugen und Schiffen, beispielsweise in Container-Zwischenräumen, gedacht.

Das bei den bisher beschriebenen Anwendungsfällen in kapillarartigen Aufnahmeräumen eines Trägermateriales aufgenommene Latentwärmespeichermaterial auf Paraffinbasis kann in zahlreichen Fällen auch ohne Trägermaterial Anwendung finden. Das Wärmespeichermaterial behält dabei seine Wärmespeicherfunktion und zeichnet sich weiterhin durch eine leichte und nahezu unbegrenzte Verformbarkeit aus. Als mögliches Anwendungsbeispiel dafür beschreibt Fig. 15 einen Getränkekühler 74, durch den eine gegenüber bekannten Kühleinrichtungen beschleunigte Abkühlung eines in einem Getränkebehälter 75 eingeschlossenen Getränks 76 erreicht wird. Der Getränkekühler 74 enthält nach dem gezeigten Ausführungsbeispiel ein Behälterteil 77, in dessen Innenraum Latentwärmespeichermaterial 78 enthalten ist. Die nicht von dem Behälterteil 77 umschlossene Oberfläche des Latentwärmespeichermaterials 78 wird von einer Folie 79 bedeckt, die in der Weise mit dem Rand des Behälterteiles 77 verbunden ist, daß das Latentwärmespeichermaterial 78 auch in verflüssigtem Zustand nicht aus dem Getränkekühler 74 austreten kann. Die Befestigung der Folie 79 am Rand des Behälterteiles 77 kann mit geeigneten Befestigungselementen 80 erfolgen. In Fig. 15 ist als derartiges Befestigungselement ein den Rand des Behälterteiles 77 umgreifendes Profil gewählt, das sich entlang der gesamten Länge des Randes erstreckt und beispielsweise über durchgehende Klebstoffschichten 81, 82, oder auf andere verbindende und dichtende Weise, mit der Folie 79 und dem Rand des Behälterteiles 77 verbunden ist. Alternativ zu dem als Profil gewählten Befestigungselement 80, das neben einer Dichtwirkung auch eine optische Funktion erfüllt, kann auch eine unmittelbare Abdichtung zwischen der Folie 79 und dem Rand des Behälterteiles 77 vorgesehen sein. Vorzugsweise ist vorgesehen, daß die Abmessungen der Folie 79 in gestrecktem Zustand den Randabstand des Behälterteiles 77 übertreffen, so sich die Folie 79 in Ausgangslage wellen- oder faltenartig oder auch sich selbst überlappend mehr oder minder unregelmäßig auf der Oberfläche des Latentwärmespeichermaterials erstreckt. Exemplarisch zeigt dazu die Schnittansicht der Fig. 15 eine Anordnung der Folie 79 mit Lamellen 83. Zur Vorbereitung des Gebrauchs wird der Getränkekühler 74 in eine Kühleinrichtung, beispielsweise einen Kühlschrank oder eine Gefriertruhe, hineingegeben und solange dort belassen, bis das Latentwärmespeichermaterial eine gewünschte Abkühlung erfahren hat. Nach der Entnahme aus der Kühleinrichtung wird ein Getränkebehälter 75, beispielsweise eine Bierflasche, auf die Außenfläche der Folie 79 aufgelegt oder gestellt, wie dies in Fig. 15 ebenfalls dargestellt ist. Bei im wesentlichen waagerechter Ausrichtung des Getränkekühlers sinkt der Getränkebehälter aufgrund seines Gewichtes und der leichten Verformbarkeit der Folie und des Latentwärmespeichermaterials in den Innenraum des Behälterteiles 77 hinab, wobei er dabei zunehmend in Kontakt mit der an Latentwärmespeichermaterial angrenzenden Folie gelangt und von dieser umschlossen wird, wobei es, wie in Fig. 16 dargestellt, zu einer zunehmenden Streckung der Folie in der Ebene der Behälteröffnung kommt.

In Fig. 16 ist eine Anordnung erreicht, in der der Getränkebehälter 75 nahezu vollständig von der an ihm anliegenden Folie 79 und dem angrenzenden Latentwärmespeichermaterial umgeben ist. Der Getränkebehälter. 75 steht dadurch mit dem überwiegenden Teil seiner Außenfläche über die Folie 79 in direktem Wärmeaustausch mit dem abgehkühlten Latentwärmespeichermaterial 78. Aufgrund der dadurch sehr gut möglichen Wärmeleitung vom Getränkebehälter in das Latentwärmespeichermaterial wird eine sehr rasche Abkühlung des Getränkebehälters und des darin eingeschlossenen Getränkes erreicht. Nachdem eine gewünschte Abkühlung des Getränkebehälters bzw. Getränks erreicht worden ist, wird der Getränkebehälter aus dem Getränkekühler entnommen. Im Anschluß daran kommt es in Abhängigkeit von der Verformbarkeit der Folie 79 und den Materialeigenschaf ten, insbesondere der Oberflächespannung und Viskosität, des Latentwärmespeichermaterials 78 zu einer zeitabhängigen Rückverformung des Latentwärmespeichermaterials.

Der oben beschriebene Getränkekühler 74 kann außerdem auch zur Abkühlung von weiteren Gegenständen, beispielsweise von festen Lebensmitteln, eingesetzt werden.
Unter Umkehrung seines Wirkungsprinzips ist ebenso vorstellbar, daß zunächst eine Erwärmung des Latentwärmespeichermaterials in einer Heizeinrichtung, beispielsweise in einem Ofen, erfolgt und daß nach Entnahme aus der Heizeinrichtung eine Anwendung zur Erwärmung von Gegenständen, beispielsweise von Behältern mit festen oder flüssigen Nahrungsmitteln, erfolgt. Weiterhin besteht die Möglichkeit, anstelle einer gemäß Fig. 15, 16 mit Flächenüberschuß gegenüber der Behälteröffnung bemessenen Folie 79 eine Folie zu verwenden, die bereits im unbelasteten Zustand einen im wesentlichen gestreckten Verlauf besitzt und bei Gewichtsbelastung durch einen zu kühlenden bzw. zu erwärmenden Körper dessen Einsinken in das Behälterinnere aufgrund ihrer leichten Dehnbarkeit erlaubt.

Auch bei Anwendungen des Latentwärmespeichermaterials auf Paraffinbasis ohne Trägermaterial kann das Latentwärmespeichermaterial zur Erzielung vorteilhafter Eigenschaften einen einzelnen oder mehrere der bisher beschriebenen Zusatzstoffe enthalten. Bevorzugt werden dabei Zusatzstoffe verwendet, mit denen gelartige Eigenschaften des Latentwärmespeichermaterials erhalten werden. Dazu können den Paraffinen beispielsweise durch Copolymerisation hergestellte vernetzte Polymere sowie Mineralöl und bedarfsweise weitere Zusätze zugegeben werden.

In einer weiteren bevorzugten Ausführungsform ist vorgesehen, daß das Latentwärmespeichermaterial 78 innerhalb des Getränkekühlers 74 vollständig in einem Beutel aus einer für Latentwärmespeichermaterial undurchlässigen Folie eingeschlossen ist, wobei die Folie mit ihrer dem Latentwärmespeichermaterial abgewendeten Seite am Getränkebehälter anliegt und ihn dabei im Latentwärmespeichermaterial umgibt.

In Fig. 15 ist ein mögliches Anwendungsbeispiel eines Latentwärmekörpers, der eine Vielzahl von Latentwärmeteilkörpern 84 enthält, dargestellt. Im einzelnen handelt es sich dabei um einen Futterbehälter 26 mit einem Außengehäuse 27, das dem des Futterbehälters 26 aus Fig. 9 entspricht. Davon abweichend sind allerdings anstelle eines einstückigen Latentwärmekörpers 30 eine Vielzahl von Latentwärmeteilkörpern 84 vorgesehen, wobei das von den Latentwärmeteilkörpern 84 ausgefüllte Volumen mehr als das Zehnfache des Volumens von einzelnen Latentwärmeteilkörpern 84 beträgt. In weiterem Vergleich zu Fig. 6 geht aus Fig. 17 hervor, daß mit einem aus vielen kleineren Latentwärmeteilkörpern gebildeten Latentwärmekörper auch hinterschnittene Gehäuseformen problemlos ausgefüllt werden können. Bei dem in Fig. 17 gezeigten Futterbehälter kann außerdem bevorzugt in dem an die Ausformung 28 angrenzenden Bereich durch mechanische Einwirkung eine Verdichtung der Latentwärmeteilkörper vorgenommen werden, so daß dort eine bevorzugte Wärme- bzw. Kältespeicherwirkung erhalten wird.

## Patentansprüche

1. Latentwärmekörper (1) mit in einem Aufnahmeräume aufweisenden Trägermaterial aufgenommenem Latentwärmespeichermaterial wie z.B. Paraffin dadurch gekennzeichnet, daß das Trägermaterial aus Fasern aus einem organischen Kunststoff- oder Naturmaterial oder aus einem anorganischen Material wie Keramikfasern oder Mineralwolle oder aus textilen Werkstoffen besteht und daß das Trägermaterial aus einzelnen Trägermaterialelementen beispielsweise durch Verklebung zusammengesetzt ist, wobei zwischen den Trägermaterialelementen kapillarartige Aufnahmeräume für das Latentwärmespeichermaterial ausgebildet sind.

2. Latentwärmekörper nach Anspruch 1, dadurch gekennzeichnet, daß das Trägermaterial eine Faserplatte aus Zellulose-Fasern ist.

3. Latentwärmekörper nach einem oder mehreren der vorhergehenden Ansprüche, dadurch gekennzeichnet, daß der Latentwärmekörper (1) eine Umhüllung aufweist.

4. Latentwärmekörper nach einem oder mehreren der vorhergehenden Ansprüche, dadurch gekennzeichnet, daß die Umhüllung aus einem Folienmaterial besteht.

5. Latentwärmekörper nach einem oder mehreren der vorhergehenden Ansprüche, dadurch gekennzeichnet, daß die Umhüllung aus einer Aluminiumfolie besteht.

6. Latentwärmekörper nach einem oder mehreren der vorhergehenden Ansprüche, dadurch gekennzeichnet, daß die Umhüllung aus einer Polypropylenfolie besteht.

7. Latentwärmekörper nach den Merkmalen des Oberbegriffs des Anspruches 1 oder einem oder mehreren der vorhergehenden Ansprüche, dadurch gekennzeichnet, daß das Trägermaterial ein Vlies ist.

8. Latentwärmekörper nach einem oder mehreren der vorhergehenden Ansprüche, dadurch gekennzeichnet, daß das Trägermaterial etwa mit dem Zwei- bis Zehnfachen des Eigengewichtes mit Latentwärmespeichermaterial getränkt ist.

9. Latentwärmekörper nach einem oder mehreren der vorhergehenden Ansprüche, dadurch gekennzeichnet, daß der Latentwärmekörper als Plattenkörper in einem Wärmetauscher angeordnet ist.

10. Latentwärmekörper nach einem oder mehreren der vorhergehenden Ansprüche, dadurch gekennzeichnet, daß der Latentwärmekörper spiralförmig ausgebildet ist.

11. Latentwärmekörper nach einem oder mehreren der vorhergehenden Ansprüche, dadurch gekennzeichnet, daß die Kapillaren außenflächig des Trägermaterials durch Verschleifen oder dergleichen verschlossen sind.

12. Latentwärmekörper nach einem oder mehreren der vorhergehenden Ansprüche, dadurch gekennzeichnet, daß die Fasern untereinander verleimt sind.

13. Latentwärmekörper nach einem oder mehreren der vorhergehenden Ansprüche, dadurch gekennzeichnet, daß die Faserplatte eine unter geringem Druck hergestellte flexible Faserplatte ist.

14. Latentwärmekörper nach einem oder mehreren der vorhergehenden Ansprüche, dadurch gekennzeichnet, daß das Latentwärmespeichermaterial mit einer Verdickungsflussigkeit ausgerüstet ist.

15. Latentwärmekörper nach einem oder mehreren der vorhergehenden Ansprüche, dadurch gekennzeichnet, daß das Verdickungsmittel ein verzögernd wirkendes Mittel ist.

16. Latentwärmekörper nach einem oder mehreren der vorhergehenden Ansprüche, dadurch gekennzeichnet, daß das Latentwärmespeichermaterial einen Anteil an Polymeren enthält.

17. Latentwärmekörper nach einem oder mehreren der vorhergehenden Ansprüche, dadurch gekennzeichnet, daß das Mineralöl hochraffiniertes Mineralöl ist.

18. Latentwärmekörper nach einem oder mehreren der vorhergehenden Ansprüche, dadurch gekennzeichnet, daß das Mineralöl einen Anteil von circa 10-50% des Latentwärmespeichermaterials darstellt.

19. Latentwärmekörper nach einem oder mehreren der vorhergehenden Ansprüche, dadurch gekennzeichnet, daß der Massenanteil der Polymere am Latentwärmespeichermaterial nicht mehr als 5 % beträgt.

20. Mobiler Speicherheizkörper (14) mit Latentwärmekörpern(18), dadurch gekennzeichnet, daß die Latentwärmekörper nach einem oder mehreren der Ansprüche 1 bis 19 ausgebildet sind und daß die Latentwärmekörper (18) in Wärmeaustausch mit einem Heizelement (17) und in weiterem Wärmeaustausch mit einem äußeren Gehäuse (15) stehen.

21. Transportbehälter (19) mit Latentwärmekörpern (24, 25), dadurch gekennzeichnet, daß die Latentwärmekörper nach einem oder mehreren der Ansprüche 1 bis 19 ausgebildet sind und daß die Latentwärmekörper (24, 25) zwischen einem Innenbehälter (22) und einem davon beabstandeten Außengehäuse (21) schichtweise und flächenparallel zu den Wandungen des Außengehäuses (21) und des Innenbehälters (22) angeordnet sind.

22. Transportbehälter (19) nach Anspruch 21, dadurch gekennzeichnet, daß die Latentwärmekörper (24, 25) Latentwärmespeichermaterial unterschiedlicher Phasenumwandlungstemperaturen beinhalten.

23. Futterbehälter (26) mit einem Latentwärmekörper (30), dadurch gekennzeichnet, daß der Latentwärmekörper nach einem oder mehreren der Ansprüche 1 bis 19 ausgebildet ist und daß ein Außengehäuse (27) oberseitig eine Ausformung (28) als Aufnahme für Futter (29), insbesondere für Hundefutter, aufweist und daß die wärmeleitfähige Wandung der Ausformung (28) .auf der dem Futter (29) gegenüberliegenden Oberfläche in Wärmeaustausch mit dem Latentwärmekörper (30) steht.

24. Futterbehälter (31) mit einem Latentwärmekörper (40), dadurch gekennzeichnet, daß der Latentwärmekörper nach einem oder mehreren der Ansprüche 1 bis 19 ausgebildet ist und daß in einem Untergehäuse (32) mit einer Wärmedämmung (38) eine Ausnehmung (39) für den Latentwärmekörper (40) ausgebildet ist und daß auf das Untergehäuse (32) ein Obergehäuse (33) mit einer Ausformung (35) für Futter (36) aufgesetzt ist, wobei das Futter (36) über eine bodenseitige wärmeleitfähige Wandung (37) der Ausformung (35) in Wärmeaustausch mit dem Latentwärmekörper (40) steht.

25. Speicherelement für Luft-/Wasserwärmetauscher (41) mit Latentwärmekörpern (42), dadurch gekennzeichnet, daß die Latentwärmekörper nach einem oder mehreren der Ansprüche 1 bis 19 ausgebildet sind und daß die Latentwärmekörper in benachbarter Anordnung zwischen die Latentwärmekörper überdeckenden Einschweißfolien (41') angeordnet und mittels Schweißnähten (43, 43') zwischen den Einschweißfolien (41') vollständig eingeschlossen sind, wobei zwischen benachbarten Latentwärmekörpern (42) verlaufende Schweißnähte (43') als bevorzugte Verformungsbereiche ausgebildet sind.

26. Wärme-/Kühldecke (44) mit Latentwärmekörpern (46), dadurch gekennzeichnet, daß die Latentwärmekörper nach einem oder mehreren der Ansprüche 1 bis 19 ausgebildet sind und daß die Latentwärmekörper zueinander benachbart zwischen im wesentlichen flächenparallel angeordneten Gewebelagen (45, 45') angeordnet sind und mittels Nähten (47, 48) zwischen den Gewebelagen (45, 45') gehalten sind.

27. Handschuh (49) mit Latentwärmekörpern (50, 50'), dadurch gekennzeichnet, daß die Latentwärmekörper nach einem oder mehreren der Ansprüche 1 bis 19 ausgebildet sind und daß die Latentwärmekörper zwischen inneren und äußeren Gewebeschichten des Handschuhes eingenäht sind.

28. Einlegesohle (51) für Schuhe mit einem Latentwärmekörper (52), dadurch gekennzeichnet, daß der Latentwärmekörper nach einem oder mehreren der Ansprüche 1 bis 19 ausgebildet ist und daß die Kontur des Latentwärmekörpers (52) im wesentlichen der Kontur der Einlegesohle (51) entspricht.

29. Einlegesohle nach Anspruch 28, dadurch gekennzeichnet, daß an der Ober- und/oder Unterseite des Latentwärmekörpers (52) weitere Materialschichten, insbesondere Schaumstoff-, Gummi- und/oder textile Gewebelagen, befestigt sind.

30. Weste (54) mit Latentwärmekörpern (55, 56, 57), dadurch gekennzeichnet, daß die Latentwärmekörper nach einem oder mehreren der Ansprüche 1 bis 19 ausgebildet sind und daß die Latentwärmekörper zwischen inneren und äußeren Gewebeschichten der Weste eingenäht sind.

31. Als Speicherelement (58) für Bauwerke ausgebildeter Latentwärmekörper, dadurch gekennzeichnet, daß der Latentwärmekörper nach einem oder mehreren der Ansprüche 1 bis 19 ausgebildet ist und daß das Trägermaterial (59) eine äußere Gitterstruktur aufweist und für diffundierenden Wasserdampf durchlässig ist.

32. Solarverdunster (62) mit einem oder mehreren Latentwärmekörpern als Speicherelementen, dadurch gekennzeichnet, daß die Latentwärmekörper nach einem oder mehreren der Ansprüche 1 bis 19 ausgebildet sind und daß der oder die Latentwärmekörper in einer umgebenden Flüssigkeit (67) in einem Außengehäuse (63) angeordnet sind, das einen Zulauf (66) für die Flüssigkeit, eine zuleitung (71) für ein Gas, eine Ableitung (72) für mit Dampf der Flüssigkeit beladenes Gas zu einem Verbraucher (73) und eine für energiereiche Strahlung durchlässige Abdeckung (64) aufweist.

33. Solarverdunster (62) nach Anspruch 32, dadurch gekennzeichnet, daß es sich bei dem Gas um Luft handelt.

34. Solarverdunster (62) nach einem oder beiden der Ansprüche 32 und 33, dadurch gekennzeichnet, daß es sich bei der Flüssigkeit (67) um Wasser handelt.

35. Solarverdunster (62) nach einem oder mehreren der Ansprüche 32 bis 34, dadurch gekennzeichnet, daß der Verbraucher (73) ein Komposter ist.

36. Solarverdunster (62) nach einem oder mehreren der Ansprüche 32 bis 35, dadurch gekennzeichnet, daß ein Sicherheitsventil (68) zur Aufrechterhaltung eines vorgewählten Flüssigkeitspegels im Außengehäuse (63) vorgesehen ist.

37. Latentwärmekörper (1) nach einem oder mehreren der Ansprüche 1 bis 19, dadurch gekennzeichnet, daß der Latentwärmekörper (1) eine Anzahl Latentwärmeteilkörper (84) enthält, wobei ein Latentwärmeteilkörper (84) ein Trägermaterialteil (85) und das in kapillarartigen Aufnahmeräumen des Trägermaterialteils (85) aufgenommene Latentwärmespeichermaterial (78) enthält.

38. Latentwärmekörper (1) nach Anspruch 37, dadurch gekennzeichnet, daß die Latentwärmeteilkörper (84) von einer gemeinsamen Umhüllung, die insbesondere Merkmale von einem oder mehreren der Ansprüche 4 bis. 6 aufweist, umgeben sind.

39. Latentwärmekörper (1) nach einem der beiden Ansprüche 37 und 38, dadurch gekennzeichnet, daß das Volumenverhältnis von Latentwärmekörper (1) zu Latentwärmeteilkörper (84) zumindest den Wert Zehn besitzt.

40. Latentwärmekörper (1) nach einem oder mehreren der Ansprüche 37 bis 39, dadurch gekennzeichnet, daß der Latentwärmeteilkörper (84) eine Umhüllung (3) enthält.

41. Latentwärmekörper (1) nach einem oder mehreren der Ansprüche 37 bis 40, dadurch gekennzeichnet, daß der Latentwärmekörper (1) Latentwärmeteilkörper (84) verschiedener Größenabmessungen beinhaltet.

42. Latentwärmekörper (1) nach einem oder mehreren der Ansprüche 37 bis 41, dadurch gekennzeichnet, daß der Latentwärmekörper (1) Latentwärmeteilkörper (84) verschiedener Formen beinhaltet.

43. Latentwärmekörper (1) nach einem oder mehreren der Ansprüche 37 bis 42, dadurch gekennzeichnet, daß der Latentwärmeteilkörper (84) eine langgestreckte Form aufweist.

44. Latentwärmekörper (1) nach einem oder mehreren der Ansprüche 37 bis 43, dadurch gekennzeichnet, daß der Latentwärmeteilkörper (84) eine flockenartige Form besitzt.

45. Verfahren zur Herstellung eines Latentwärmekörpers (1) mit in einem Aufnahmeräume aufweisenden Trägermaterial aufgenommenen Latentwärmespeichermaterial (78) auf Paraffinbasis, dadurch gekennzeichnet, daß das Latentwärmespeichermaterial (78) verflüssigt wird und daß das vorher verflüssigte Latentwärmespeichermaterial (78) an selbstansaugende kapillarartige Aufnahmeräume des Trägermaterials (86) herangeführt wird.

46. Verfahren nach Anspruch 45, dadurch gekennzeichnet, daß das Trägermaterial (86) aus einzelnen aus Fasern gebildeten Trägermaterialelementen, beispielsweise durch Verkleben, zusammengesetzt wird, wobei zwischen den Trägermaterialelementen die kapillarartigen Aufnahmeräume gebildet werden.

47. Verfahren nach einem oder beiden der Ansprüche 45 und 46, dadurch gekennzeichnet, daß das mit Latentwärmespeichermaterial (78) getränkte Trägermaterial (86) in eine Anzahl von Latentwärmeteilkörper (84) zertrennt wird.

48. Verfahren nach Anspruch 47, dadurch gekennzeichnet, daß das Zertrennen von getränktem Trägermaterial (86) durch Sägen und/oder Schneiden und/oder Reißen erfolgt.

49. Verfahren nach einem oder mehreren der Ansprüche 45 bis 48, dadurch gekennzeichnet, daß der Latentwärmekörper und/oder der Latentwärmeteilkörper (84) gepreßt wird.

50. Verfahren nach einem oder mehreren der Ansprüche 45 bis 49, dadurch gekennzeichnet, daß der Latentwärmeteilkörper (84) mit einer Umhüllung (3) versehen wird.

51. Verfahren nach einem oder mehreren der Ansprüche 45 bis 50, dadurch gekennzeichnet, daß die Latentwärmeteilkörper (84) des Latentwärmekörpers (1) mit einer sie gemeinsam umgebenden Umhüllung (3) versehen werden.

52. Verfahren nach Anspruch 51, dadurch gekennzeichnet, daß der Preßvorgang für eine Anzahl von Latentwärmeteilkörper (84) in der gemeinsamen Umhüllung (3) gemeinsam erfolgt.

53. Latentwärmekörper nach einem oder mehreren der Ansprüche 1 bis 19 und/oder 37 bis 44, dadurch gekennzeichnet, daß in dem Latentwärmekörper ein mikrowellenaktiver Stoff enthalten ist.

54. Latentwärmekörper nach Anspruch 53, dadurch gekennzeichnet, daß der mikrowellenaktive Stoff gleichmäßig im Latentwärmekörper verteilt ist.

55. Latentwärmekörper nach einem oder beiden Ansprüchen 53 und 54, dadurch gekennzeichnet, daß Trägermaterialelemente den mikrowellenaktiven Stoff enthalten.

56. Latentwärmekörper nach einem oder mehreren der Ansprüche 53 bis 55, dadurch gekennzeichnet, daß der mikrowellenaktive Stoff in kapillarartigen Aufnahmeräumen enthalten ist.

57. Latentwärmekörper nach einem oder mehreren der Ansprüche 53 bis 56, dadurch gekennzeichnet, daß der mikrowellenaktive Stoff in Hohlräumen zwischen Latentwärmeteilkörpern enthalten ist.

58. Latentwärmekörper nach einem oder mehreren der Ansprüche 53 bis 57, dadurch gekennzeichnet, daß der mikrowellenaktive Stoff eine pulverartige Form aufweist.

59. Latentwärmekörper nach einem oder mehreren der Ansprüche 53 bis 58, dadurch gekennzeichnet, daß der mikrowellenaktive Stoff eine granulatartige Form aufweist.

60. Latentwärmekörper nach einem oder mehreren der Ansprüche 53 bis 59, dadurch gekennzeichnet, daß der mikrowellenaktive Stoff eine faserartige Form aufweist.

61. Latentwärmekörper nach einem oder mehreren der Ansprüche 53 bis 60, dadurch gekennzeichnet, daß der mikrowellenaktive Stoff eine gitterartige Form aufweist.

62. Latentwärmekörper nach einem oder mehreren der Ansprüche 53 bis 61, dadurch gekennzeichnet, daß der mikrowellenaktive Stoff bei Gebrauchstemperatur des Latentwärmekörpers eine Flüssigkeit ist.

63. Latentwärmekörper nach einem oder mehreren der Ansprüche 53 bis 62, dadurch gekennzeichnet, daß der mikrowellenaktive Stoff aus einer oder mehreren der Werkstoffgruppen Gläser, Kunststoffe, Mineralstoffe, Metalle, Kohle, Keramik ausgewählt ist.

64. Verfahren nach einem oder mehreren der Ansprüche 45 bis 52, dadurch gekennzeichnet, daß dem Latentwärmekörper ein mikrowellenaktiver Stoff zugesetzt wird.

65. Verfahren nach Anspruch 64, dadurch gekennzeichnet, daß der mikrowellenaktive Stoff im Latentwärmekörper gleichmäßig verteilt wird.

66. Verfahren nach einem oder beiden der Ansprüche 64 und 65 dadurch gekennzeichnet, daß der mikrowellenaktive Stoff Trägermaterialelementen bei deren Herstellung zugesetzt wird.

67. Verfahren nach einem oder mehreren der Ansprüche 64 bis 66, dadurch gekennzeichnet, daß der mikrowellenaktive Stoff beim Zusammensetzen des Trägermaterials aus Trägermaterialelementen in dabei gebildeten kapillarartigen Aufnahmeräumen eingelagert wird.

68. Verfahren nach einem oder beiden der Ansprüche 64 und 67, dadurch gekennzeichnet, daß der mikrowellenaktive Stoff in Hohlräumen zwischen Latentwärmeteilkörpern eingelagert wird.

69. Verfahren nach einem oder mehreren der Ansprüche 64 bis 68, dadurch gekennzeichnet, daß der mikrowellenaktive Stoff dem Latentwärmespeichermaterial zugesetzt wird, bevor das Latentwärmespeichermaterial an die kapillarartigen Aufnahmeräume des Trägermaterials herangeführt wird.

## Claims

1. Latent heat body (1) with latent heat storage material, for example paraffin, accommodated in a carrier material which has holding spaces, characterized in that the carrier material comprises fibres of an organic plastics material or natural material or of an inorganic material, such as ceramic fibres or mineral wool, or of textile materials, and in that the carrier material is assembled from individual carrier-material elements, for example by adhesive bonding, capillary-like holding spaces for the latent heat storage material being formed between the carrier-material elements.

2. Latent heat body according to Claim 1, characterized in that the carrier material is a fibreboard made from cellulose fibres.

3. Latent heat body according to one or more of the preceding claims, characterized in that the latent heat body (1) has a surrounding cover.

4. Latent heat body according to one or more of the preceding claims, characterized in that the surrounding cover comprises a film/foil material.

5. Latent heat body according to one or more of the preceding claims, characterized in that the surrounding cover comprises an aluminium foil.

6. Latent heat body according to one or more of the preceding claims, characterized in that the surrounding cover comprises a polypropylene film.

7. Latent heat body according to the features of the preamble of Claim 1 or one or more of the preceding claims, characterized in that the carrier material is a nonwoven.

8. Latent heat body according to one or more of the preceding claims, characterized in that the carrier material is impregnated with approximately two to ten times its own weight of latent heat storage material.

9. Latent heat body according to one or more of the preceding claims, characterized in that the latent heat body is arranged as a plate body in a heat exchanger.

10. Latent heat body according to one or more of the preceding claims, characterized in that the latent heat body is formed to be of helical shape.

11. Latent heat body according to one or more of the preceding claims, characterized in that the capillaries on the outer surface of the carrier material are closed by grinding or the like.

12. Latent heat body according to one or more of the preceding claims, characterized in that the fibres are glued together.

13. Latent heat body according to one or more of the preceding claims, characterized in that the fibreboard is a flexible fibreboard produced under low pressure.

14. Latent heat body according to one or more of the preceding claims, characterized in that the latent heat storage material is provided with a thickening liquid.

15. Latent heat body according to one or more of the preceding claims, characterized in that the thickening agent is a delayed-action agent.

16. Latent heat body according to one or more of the preceding claims, characterized in that the latent heat storage material contains a proportion of polymers.

17. Latent heat body according to one or more of the preceding claims, characterized in that the mineral oil is highly-refined mineral oil.

18. Latent heat body according to one or more of the preceding claims, characterized in that the mineral oil forms approximately 10-50% of the latent heat storage material.

19. Latent heat body according to one or more of the preceding claims, characterized in that the polymers amount to no more than 5% by mass of the latent heat storage material.

20. Mobile storage heater (14) having latent heat bodies (18), characterized in that the latent heat bodies are formed according to one or more of Claims 1 to 19 and in that the latent heat bodies (18) exchange heat with a heater element (17) and exchange further heat with an outer casing (15).

21. Transport container (19) having latent heat bodies (24, 25), characterized in that the latent heat bodies are formed according to one or more of Claims 1 to 19, and in that the latent heat bodies (24, 25) are arranged between an inner container (22) and an outer casing (21) which is at a distance from the inner container, in layers and with their surfaces parallel to the walls of the outer casing (21) and the inner container (22).

22. Transport container (19) according to Claim 21, characterized in that the latent heat bodies (24, 25) contain latent heat storage material of different phase-transition temperatures.

23. Animal-feed container (26) having a latent heat body (30), characterized in that the latent heat body is formed according to one or more of Claims 1 to 19, and in that an outer casing (27) has, on its top side, a recess (28) as a receptacle for animal feed (29), in particular for dog food, and in that the thermally conductive wall of the recess (28) on the surface which is opposite to the feed (29) exchanges heat with the latent heat body (30).

24. Animal-feed container (31) having a latent heat body (40), characterized in that the latent heat body is formed according to one or more of Claims 1 to 19 and in that a chamber (39) for the latent heat body (40) is formed in a lower casing (32) with thermal insulation (38), and in that an upper casing (33) with a recess (35) for animal feed (36) is positioned on top of the lower casing (32), the feed (36), via a base-side, thermally conductive wall (37) of the recess (35), exchanging heat with the latent heat body (40).

25. Storage element for air/water heat exchangers (41) having latent heat bodies (42), characterized in that the latent heat bodies are formed according to one or more of Claims 1 to 19, and in that the latent heat bodies are arranged between weld-in foils (41') which, arranged next to one another, cover the latent heat bodies, and by means of weld seams (43, 43'), are completely enclosed between the weld-in foils (41'), weld seams (43') which run between adjacent latent heat bodies (42) being formed as preferred deformation areas.

26. Heating/cooling blanket (44) having latent heat bodies (46), characterized in that the latent heat bodies are formed according to one or more of Claims 1 to 19, and in that the latent heat bodies are arranged next to one another between fabric layers (45, 45') with the surfaces substantially parallel to one another and are held between the fabric layers (45, 45') by means of seams (47, 48).

27. Glove (49) having latent heat bodies (50, 50'), characterized in that the latent heat bodies are formed according to one or more of Claims 1 to 19, and in that the latent heat bodies are sewn between inner and outer fabric layers of the glove.

28. Insole (51) for shoes, having a latent heat body (52), characterized in that the latent heat body is formed according to one or more of Claims 1 to 19, and in that the contour of the latent heat body (52) substantially corresponds to the contour of the insole (51).

29. Insole according to Claim 28, characterized in that further material layers, in particular layers of foam, rubber and/or textile fabric, are attached to the top and/or bottom side of the latent heat body (52).

30. Waistcoat (54) having latent heat bodies (55, 56, 57), characterized in that the latent heat bodies are formed according to one or more of Claims 1 to 19, and in that the latent heat bodies are sewn between inner and outer fabric layers of the waistcoat.

31. Latent heat body which is formed as a storage panel (58) for buildings, characterized in that the latent heat body is formed according to one or more of Claims 1 to 19, and in that the carrier material (59) has an outer grid structure and is permeable to difussing water vapour.

32. Solar evaporator (62) having one or more latent heat bodies as storage elements, characterized in that the latent heat bodies are formed according to one or more of Claims 1 to 19, and in that the latent heat body/bodies is/are arranged in a surrounding liquid (67) in an outer casing (63) which has an inlet (66) for the liquid, a feed line (71) for a gas, a discharge line (72) for gas which is laden with vapour from the liquid, leading to a consumer (73), and a cover (64) which is permeable to high-energy radiation.

33. Solar evaporator (62) according to Claim 32, characterized in that the gas is air.

34. Solar evaporator (62) according to one or both of Claims 32 and 33, characterized in that the liquid (67) is water.

35. Solar evaporator (62) according to one or more of Claims 32 to 34, characterized in that the consumer (73) is a composter.

36. Solar evaporator (62) according to one or more of Claims 32 to 35, characterized in that a safety valve (68) is provided in order to maintain a preselected liquid level in the outer casing (63).

37. Latent heat body (1) according to one or more of Claims 1 to 19, characterized in that the latent heat body (1) contains a number of latent heat part-bodies (84), a latent heat part-body (84) containing a carrier-material part (85) and the latent heat storage material (78) which is accommodated in capillary-like holding spaces in the carrier-material part (85).

38. Latent heat body (1) according to Claim 37, characterized in that the latent heat part-bodies (84) are surrounded by a common surrounding cover which in particular has features of one or more of Claims 4 to 6.

39. Latent heat body (1) according to one of the two Claims 37 and 38, characterized in that the volumetric ratio of latent heat body (1) to latent heat part-body (84) is at least ten.

40. Latent heat body (1) according to one or more of Claims 37 to 39, characterized in that the latent heat part-body (84) contains a surrounding cover (3).

41. Latent heat body (1) according to one or more of Claims 37 to 40, characterized in that the latent heat body (1) contains latent heat part-bodies (84) of different sizes.

42. Latent heat body (1) according to one or more of Claims 37 to 41, characterized in that the latent heat body (1) contains latent heat part-bodies (84) of different shapes.

43. Latent heat body (1) according to one or more of Claims 37 to 42, characterized in that the latent heat part-body (84) is of elongate shape.

44. Latent heat body (1) according to one or more of Claims 37 to 43, characterized in that the latent heat part-body (84) is in the form of a flake.

45. Process for producing a latent heat body (1) with paraffin-based latent heat storage material (78) accommodated in a carrier material which has holding spaces, characterized in that the latent heat storage material (78) is liquefied, and in that the latent heat storage material (78) which has previously been liquefied is fed to capillary-like holding spaces in the carrier material (86) which suck the liquefied material in automatically.

46. Process according to Claim 45, characterized in that the carrier material (86) is assembled from individual carrier-material elements formed from fibres, for example by adhesive bonding, the capillary-like holding spaces being formed between the carrier-material elements.

47. Process according to one or both of Claims 45 and 46, characterized in that the carrier material (86) which is impregnated with latent heat storage material (78) is divided into a number of latent heat part-bodies (84).

48. Process according to Claim 47, characterized in that the division of impregnated carrier material (86) is carried out by sawing and/or cutting and/or tearing.

49. Process according to one or more of Claims 45 to 48, characterized in that the latent heat body and/or the latent heat part-body (84) is compressed.

50. Process according to one or more of Claims 45 to 49, characterized in that the latent heat part-body (84) is provided with a surrounding cover (3).

51. Process according to one or more of Claims 45 to 50, characterized in that the latent heat part-bodies (84) of the latent heat body (1) are provided with a surrounding cover (3) which surrounds them together.

52. Process according to Claim 51, characterized in that the compression operation takes place for a number of latent heat part-bodies (84) together in the common surrounding cover.

53. Latent heat body according to one or more of Claims 1 to 19 and/or 37 to 44, characterized in - that a microwave-active substance is contained in the latent heat body.

54. Latent heat body according to Claim 53, characterized in that the microwave-active substance is uniformly distributed in the latent heat body.

55. Latent heat body according to one or both of Claims 53 and 54, characterized in that carrier-material elements contain the microwave-active substance.

56. Latent heat body according to one or more of Claims 53 to 55, characterized in that the microwave-active substance is contained in capillary-like holding spaces.

57. Latent heat body according to one or more of Claims 53 to 56, characterized in that the microwave-active substance is contained in cavities between latent heat part-bodies.

58. Latent heat body according to one or more of Claims 53 to 57, characterized in that the microwave-active substance is in powder form.

59. Latent heat body according to one or more of Claims 53 to 58, characterized in that the microwave-active substance is in granular form.

60. Latent heat body according to one or more of Claims 53 to 59, characterized in that the microwave-active substance is in fibre form.

61. Latent heat body according to one or more of Claims 53 to 60, characterized in that the microwave-active substance is in lattice-like form.

62. Latent heat body according to one or more of Claims 53 to 61, characterized in that the microwave-active substance is a liquid at the temperature at which the latent heat body is used.

63. Latent heat body according to one or more of Claims 53 to 62, characterized in that the microwave-active substance is selected from one or more of the materials groups consisting of glass materials, plastics materials, minerals, metals, coal, ceramics.

64. Process according to one or more of Claims 45 to 52, characterized in that a microwave-active substance is added to the latent heat body.

65. Process according to Claim 64, characterized in that the microwave-active substance is distributed uniformly in the latent heat body.

66. Process according to one or both of Claims 64 and 65, characterized in that the microwave-active substance is added to carrier-material elements while they are being produced.

67. Process according to one or more of Claims 64 to 66, characterized in that the microwave-active substance, when the carrier material is being assembled from carrier-material elements, is stored in capillary-like holding spaces which are formed during this assembly.

68. Process according to one or both of Claims 64 to 67, characterized in that the microwave-active substance is stored in cavities between latent heat part-bodies.

69. Process according to one or more of Claims 64 to 68, characterized in that the microwave-active substance is added to the latent heat storage material before the latent heat storage material is fed to the capillary-like holding spaces in the carrier material.

## Revendications

1. Corps à chaleur latente (1) comportant un matériau accumulateur de chaleur latente, tel que par exemple de la paraffine, logé dans un matériau support présentant des espaces de logement, caractérisé en ce que le matériau support est constitué de fibres en un matériau synthétique ou naturel organique, ou d'un matériau minéral, tel que des fibres de céramique, de la laine minérale, ou bien des matériaux textiles, et en ce que le matériau support est constitué d'éléments de matériaux supports individuels, par exemple assemblés par collage, des espaces de logement du genre capillaire étant réalisés entre les éléments de matériau support pour le matériau accumulateur de chaleur latente.

2. Corps à chaleur latente selon la revendication 1, caractérisé en ce que le matériau support est une plaque de fibres constituée de fibres de cellulose.

3. Corps à chaleur latente selon l'une ou plusieurs des revendications précédentes, caractérisé en ce que le corps à chaleur latente (1) présente une enveloppe.

4. Corps à chaleur latente selon l'une ou plusieurs des revendications précédentes, caractérisé en ce que l'enveloppe est constituée d'un matériau en feuilles.

5. Corps à chaleur latente selon l'une ou plusieurs des revendications précédentes, caractérisé en ce que l'enveloppe est constituée d'une feuille d'aluminium.

6. Corps à chaleur latente selon l'une ou plusieurs des revendications précédentes, caractérisé en ce que l'enveloppe est constituée d'une feuille de polypropylène.

7. Corps à chaleur latente selon les caractéristiques du préambule de la revendication 1 ou l'une ou plusieurs des revendications précédentes, caractérisé en ce que le matériau support est un matelas de fibres non-tissé.

8. Corps à chaleur latente selon l'une ou plusieurs des revendications précédentes, caractérisé en ce que le matériau support est imbibé du matériau accumulateur de chaleur latente, au double jusqu'au décuple du poids propre.

9. Corps à chaleur latente selon l'une ou plusieurs des revendications précédentes, caractérisé en ce que le corps à chaleur latente est réalisé sous la forme de corps en plaques, dans un échangeur de chaleur.

10. Corps à chaleur latente selon l'une ou plusieurs des revendications précédentes, caractérisé en ce que le corps à chaleur latente est en forme de spirale.

11. Corps à chaleur latente selon l'une ou plusieurs des revendications précédentes, caractérisé en ce que les capillaires sont fermés sur la face extérieure du matériau support, par meulage ou analogue.

12. Corps à chaleur latente selon l'une ou plusieurs des revendications précédentes, caractérisé en ce que les fibres sont collées entre elles.

13. Corps à chaleur latentc selon l'une ou plusieurs des revendications précédentes, caractérisé en ce que la plaque de fibres est une plaque de fibres flexible, fabriquée sous faible pression.

14. Corps à chaleur latente selon l'une ou plusieurs des revendications précédentes, caractérisé en ce que le matériau accumulateur de chaleur latente est garni d'un liquide épaississant.

15. Corps à chaleur latente selon l'une ou plusieurs des revendications précédentes, caractérisé en ce que le fluide épaississant est un fluide agissant à retardement.

16. Corps à chaleur latente selon l'une ou plusieurs des revendications précédentes, caractérisé en ce que le matériau accumulateur de chaleur latente contient une certaine proportion de polymères.

17. Corps à chaleur latente selon l'une ou plusieurs des revendications précédentes, caractérisé en ce que l'huile minérale est de l'huile minérale hautement raffinée.

18. Corps à chaleur latente selon l'une ou plusieurs des revendications précédentes, caractérisé en ce que l'huile minérale constitue une partie d'environ 10 à 50 % du matériau accumulateur de chaleur latente.

19. Corps à chaleur latente selon l'une ou plusieurs des revendications précédentes, caractérisé en ce que la proportion en masse de polymère dans le matériau conducteur de chaleur latente n'est pas supérieure à 5 %.

20. Corps chauffant accumulateur (14) mobile, muni de corps à chaleur latente (18), caractérisé en ce que les corps à chaleur latente sont réalisés selon l'une ou plusieurs des revendications 1 à 19 et en ce que les corps à chaleur latente (18) sont placés en échange de chaleur avec un élément chauffant (17) et en un autre échange de chaleur avec un boîtier extérieur (15).

21. Récipient de transport (19) avec des corps à chaleur latente (24, 25), caractérisé en ce que les corps à chaleur latente sont réalisés selon l'une ou plusieurs des revendications 1 à 19 et en ce que les corps à chaleur latente (24, 25) sont disposés entre un récipient intérieur (22) et un boîtier extérieur (21) espacé de celui-ci, par couches et parallèlement à la surface des parois du boîtier extérieur (21) et du récipient intérieur (22).

22. Récipient de transport (19) selon la revendication 21, caractérisé en ce que les corps à chaleur latente (24, 25) contiennent du matériau accumulateur de chaleur latente présentant des températures de changement de phase différentes.

23. Récipient (26) à aliments pour animaux avec un corps à chaleur latente (30), caractérisé en ce que le corps à chaleur latente est réalisé selon l'une ou plusieurs des revendications 1 à 19 et en ce qu'un boîtier extérieur (27) présente, sur la face supérieure, une partie en creux (28) recevant des aliments pour animaux (29), en particulier de l'alimentation pour chiens, et en ce que la paroi conductrice de la chaleur de la partie en creux (28) est placée en échange thermique avec le corps à chaleur latente (30) sur la surface opposée aux aliments pour animaux (29).

24. Récipient (31) à aliments pour animaux muni d'un corps à chaleur latente (40), caractérisé en ce que le corps à chaleur latente est réalisé selon l'une ou plusieurs des revendications 1 à 19, et en ce que, dans un boîtier inférieur (32) ayant une isolation thermique (38), est réalisé un évidement (39) pour le corps à chaleur latente (40), et en ce que, sur le boîtier inférieur (32), est placé un boîtier supérieur (33) muni d'une cavité (35) pour des aliments pour animaux (36), placés sur une paroi (37) de la cavité (35), conductrice de la chaleur du côté du fond, en échange de chaleur avec le corps à chaleur latente (40).

25. Élément accumulateur pour échangeur de chaleur air/eau (41) avec des corps à chaleur latente (42), caractérisé en ce que les corps à chaleur latente sont réalisés selon l'une ou plusieurs des revendications 1 à 19 et en ce que les corps à chaleur latente sont disposés, selon un agencement contigu, entre des feuilles à souder (41') recouvrant les corps à chaleur latente et sont complètement confinés, au moyen de cordons de soudure (43, 43'), entre les feuilles à souder (41'), les cordons de soudure (43') s'étendant entre des corps à chaleur latente (42) contigus, étant réalisés sous la tonne de zones de déformation préférées.

26. Plafond chauffant/refroidissant (44) avec des corps à chaleur latente (36), caractérisé en ce que les corps à chaleur latente sont réalisés selon l'une ou plusieurs des revendications 1 à 19, et en ce que les corps à chaleur latente sont disposés au voisinage les uns des autres, entre des couches de tissu (45, 45') disposées avec des surfaces sensiblement parallèles, et sont maintenues entre les couches de tissu (45, 45') au moyen de coutures ou de lignes de joint (47,48).

27. Gant (49) équipé de corps à chaleur latente (50, 50'), caractérisé en ce que les corps à chaleur latente sont réalisés selon l'une ou plusieurs des revendications 1 à 19 et en ce que les corps à chaleur latente sont cousus entre des couches de tissu intérieures et extérieures du gant.

28. Semelle intérieure (51) pour des chaussures, avec un corps à chaleur latente (52), caractérisée en ce que le corps à chaleur latente est réalisé selon l'une ou plusieurs des revendications 1 à 19, et en ce que le contour du corps à chaleur latente (52) correspond sensiblement au contour de la semelle intérieure (51).

29. Semelle intérieure selon la revendication 28, caractérisée en ce que, sur la face supérieure et/ou inférieure du corps à chaleur latente (52), sont fixés d'autres couches de matériau, en particulier des couches de matière alvéolaire, d'élastomère et/ou de tissu textile.

30. Gilet (54) muni de corps à chaleur latente (55, 56, 57), caractérisé en ce que les corps à chaleur latente sont réalisés selon l'une ou plusieurs des revendications 1 à 19, et en ce que les corps à chaleur latente sont cousus entre des couches de tissu intérieures et extérieures du gilet.

31. Corps à chaleur latente réalisé sous forme d'élément accumulateur (58) pour des bâtiments, caractérisé en ce que le corps à chaleur latente est réalisé selon l'une ou plusieurs des revendications 1 à 19, et en ce que le matériau support (59) présente une structure extérieure à grille et est perméable à la diffusion de la vapeur d'eau.

32. Évaporateur solaire (62) avec un ou plusieurs corps à chaleur latente faisant office d'éléments accumulateurs, caractérisé en ce que les corps à chaleur latente sont réalisés selon l'une ou plusieurs des revendications 1 à 19, et en ce que le ou les corps à chaleur latente sont disposés dans un liquide (67) environnant, placé dans un boîtier extérieur (63), qui comporte une alimentation (66) pour le liquide, une conduite d'amenée (71) pour un gaz, une conduite d'évacuation (72) pour un gaz chargé en vapeur du liquide et allant vers un utilisateur (73), et un revêtement (64) perméable à un rayonnement riche en énergie.

33. Évaporateur solaire (62) selon la revendication 32, caractérisé en ce que le gaz est de l'air.

34. Évaporateur solaire (62) selon l'une ou les deux revendications 32 et 33, caractérisé en ce que le liquide (67) est de l'eau.

35. Évaporateur solaire (62) selon l'une ou plusieurs des revendications 32 à 34, caractérisé en ce que l'utilisateur (73) est un composteur.

36. Évaporateur solaire (62) selon l'une ou plusieurs des revendications 32 à 35, caractérisé en ce qu'une valve de sécurité (68), pour la conservation d'un niveau de liquide sélectionné, est prévue dans le boîtier extérieur (63).

37. Corps à chaleur latente (1) selon l'une ou plusieurs des revendications 1 à 19, caractérisé en ce que le corps à chaleur latente (1) contient une pluralité de corps partiels à chaleur latente (84), un corps partiel à chaleur latente (84) contenant une partie de matériau support (85) et le matériau accumulateur de chaleur latente (78) logé dans des espaces capillaires de réception de la partie de matériau support (85).

38. Corps à chaleur latente (1) selon la revendication 37, caractérisé en ce que les corps partiels à chaleur latente (84) sont entourés d'une enveloppe commune, qui présente en particulier les caractéristiques de l'une ou plusieurs des revendications 4 à 6.

39. Corps à chaleur latente (1) selon l'une des dcux revendications 37 et 38, caractérisé en ce que le rapport volumétrique entre le corps à chaleur latente (1) et le corps partiel à chaleur latente (84) est d'au moins 10.

40. Corps à chaleur latente (1) selon l'une ou plusieurs des revendications 37 à 39, caractérisé en ce que le corps partiel à chalcur latente (84) contient une enveloppe (3).

41. Corps à chaleur latente (1) selon l'une ou plusieurs des revendications 37 à 40, caractérisé en ce que le corps à chaleur latente (1) contient des corps partiels à chaleur latente (84) de différentes tailles.

42. Corps à chaleur latente (1) selon l'une ou plusieurs des revendications 37 à 41, caractérisé en ce que le corps à chaleur latente (1) contient des corps partiels à chaleur latente (84) de différentes formes.

43. Corps à chaleur latente (1) selon l'une ou plusieurs des revendications 37 à 42, caractérisé en ce que le corps partiel à chaleur latente (84) présente une forme allongée.

44. Corps à chaleur latente (1) selon l'une ou plusieurs des revendications 37 à 43, caractérisé en ce que le corps partiel à chaleur latente (84) présente une forme de flocon.

45. Procédé de fabrication d'un corps à chaleur latente (1) avec un matériau accumulateur de chaleur latente (78) à base de paraffine logé dans du matériau support présentant des espaces de logement, caractérisé en ce que le matériau accumulateur de chaleur latente (78) est liquéfié et en ce que le matériau accumulateur de chaleur latente (78) préalablement liquéfié est amené à des espaces de logement capillaires, auto-aspirants, du matériau support (86).

46. Procédé selon la revendication 45, caractérisé en ce que le matériau support (86) est constitué par assemblage d'éléments de matériau support individuels formés de fibres, par exemple par collage, les cspaces de logement capillaires étant formés entre les éléments de matériau support.

47. Procédé selon l'une ou les deux revendications 45 et 46, caractérisé en ce que le matériau support (86) imbibé de matériau accumulateur de chaleur latente (78) est décomposé en une pluralité de corps partiels à chaleur latente (84).

48. Procédé selon la revendication 47, caractérisé en ce que la décomposition du matériau support imbibé (86) s'effectue par sciage et/ou découpage et/ou déchirement.

49. Procédé selon l'une ou plusieurs des revendications 45 à 48, caractérisé en ce que le corps à chaleur latente et/ou le corps partiel à chaleur latente (84) est/sont pressé(s).

50. Procédé selon l'une ou plusieurs des revendications 45 à 49, caractérisé en ce que le corps partiel à chaleur latente (84) est muni d'une enveloppe (3).

51. Procédé selon l'une ou plusieurs des revendications 45 à 50, caractérisé en ce que les corps partiels à chaleur latente (84) du corps à chaleur latente (1) sont munis d'une enveloppe (3) les entourant conjointement.

52. Procédé selon la revendication 51, caractérisé en ce que le processus de pressage est effectué conjointement pour plusieurs corps partiels à chaleur latente (84) placés dans l'enveloppe (3) commune.

53. Corps à chaleur latente selon l'une ou plusieurs des revendications 1 à 19 et/ou 37 à 44, caractérisé en ce qu'une substance active sous l'effet des micro-ondes, est contenue dans le corps à chaleur latente.

54. Corps à chaleur latente selon la revendication 53, caractérisé en ce que la substance active sous l'effet des micro-ondes, est répartie régulièrement dans le corps à chaleur latente

55. Corps à chaleur latente selon l'une ou les deux revendications 53 et 54, caractérisé en ce que les éléments de matériau support contiennent la substance active sous l'effet des micro-ondes.

56. Corps à chaleur latente selon l'une ou plusieurs des revendications 53 à 55, caractérisé en ce que la substance active sous l'effet des micros-ondes est contenue dans des espaces de logement capillaires.

57. Corps à chaleur latente selon l'une ou plusieurs des revendications 53 à 56, caractérise en ce que la substance active sous l'effet des micros-ondes est contenue dans des espaces creux entre les corps partiels à chaleur latente.

58. Corps à chaleur latente selon l'une ou plusieurs des revendications 53 à 57, caractérisé en ce que la substance active sous l'effet des micros-ondes présente une forme pulvérulente.

59. Corps à chaleur latente selon l'une ou plusieurs des revendications 53 à 58, caractérisé en ce que la substance active sous l'effet des micros-ondes présente une forme granulaire.

60. Corps à chaleur latente selon l'une ou plusieurs des revendications 53 à 59, caractérisé en ce que la substance active sous l'effet des micros-ondes présente une forme fibreuse.

61. Corps à chaleur latente selon l'une ou plusieurs des revendications 53 à 60, caractérisé en ce que la substance active sous l'effet des micros-ondes présente une forme de grille.

62. Corps à chaleur latente selon l'une ou plusieurs des revendications 53 à 61, caractérisé en ce que la substance active sous l'effet des micros-ondes est un liquide à la température d'utilisation du corps à chaleur latente.

63. Corps à chaleur latente selon l'une ou plusieurs des revendications 53 à 62, caractérisé en ce que la substance active sous l'effet des micros-ondes est sélectionnée parmi un ou plusieurs des groupes de matériaux constitués par le verre, les substances synthétiques ou matières plastiques, les substances minérales, les métaux, le charbon, la céramique.

64. Procédé selon l'une ou plusieurs des revendications 45 à 52, caractérisé en ce qu'une substance active sous l'effet des micros-ondes est ajoutée au corps à chaleur latente.

65. Procédé selon la revendication 64, caractérisé en ce que la substance active sous l'effet des micros-ondes est répartie régulièrement dans le corps à chaleur latente.

66. Procédé selon une ou les deux revendications 64 et 65, caractérisé cn ce que la substance active sous l'effet des micros-ondes est ajoutée aux éléments de matériau support lors de leur fabrication.

67. Procédé selon l'une ou plusieurs des revendications 64 à 66, caractérisé en ce que la substance active sous l'effet des micros-ondes est intégrée dans des espaces de logement capillaires, alors constitués lors de l'assemblage du matériau support à partir d'éléments de matériau support.

68. Procédé selon l'une ou les deux revendications 64 à 67, caractérisé en ce que la substance active sous l'effet des micros-ondes est intégrée dans des espaces creux, entre des corps partiels à chaleur latente.

69. Procédé selon l'une ou plusieurs des revendications 64 à 68, caractérisé en ce que la substance active sous l'effet des micros-ondes est ajoutée au matériau accumulateur de chaleur latente, avant que le matériau accumulateur de chaleur latente soit amené aux espaces capillaires de logement du matériau support.
